# EUROPEAN PATENT APPLICATION

(11) **EP 4 261 544 A1**
(43) Date of publication of application: **18.10.2023**
(21) Application number: 21903174.7
(22) Date of filing: 24.11.2021
(51) Int. Cl.: G01N 35/00, G01N 35/02, G01N 33/483, G01N 21/17

(54) **INSPECTION DEVICE, INFORMATION PROCESSING METHOD, AND PROGRAM**

(30) Priority: 11.12.2020 JP 2020205541; 13.07.2021 JP 2021115741
(71) Applicant: HORIBA, Ltd., Minami-ku Kyoto-shi Kyoto 601-8510 (JP)
(72) Inventor: MATSUDA Yasunori, Kyoto-shi, Kyoto 601-8510 (JP); FUJIOKA Yuji, Kyoto-shi, Kyoto 601-8510 (JP)
(74) Representative: Isarpatent
(86) International application number: PCT/JP2021/042942
(87) International publication number: WO 2022/124070

(57) **Abstract**

A testing device includes: at least one light source that can be lit at different positions; a light source control unit that controls the lighting of the at least one light source; a rotation mechanism that rotates a chip 6; an imaging unit that acquires a plurality of individual images K1 to K12 by shooting, at each of the different positions at different times respectively, the chip 6 located, by being rotated by the rotation mechanism, in an illuminated area illuminated by the lighting of the at least one light source; an image generation unit that generates an analysis image based on the plurality of individual images K1 to K12; and an information acquisition unit that acquires target object information on the state of the test object or of the storage container based on the analysis image. The brightness value of each pixel in the analysis image is calculated using the brightness values of the pixels at the same position among the plurality of individual images.

## Description

### Technical Field

The present invention relates to testing devices, and to methods and programs for information processing.

### Background Art

A variety of devices are known that shine light on a test object to test it (see, for example, Patent Document 1 identified below). Among them compact sample testing devices that allow easy testing of a sample such as blood are suitable for POCT (point-of-care testing), that is, testing at a site such as a clinic where patients are present, and are seeing wider and wider use.

On a sample testing device as mentioned above, a sample container having a sample put in it is loaded in a chip, and the chip is then rotated so that a given component (e.g., blood plasma ) contained in the sample will be centrifugally separated. The separated component is then reacted with a test reagent in the chip, and the light absorbance of the reaction product is measured optically to yield a test result.

### Citation List

### Patent Literature

Patent Document 1: JP-A-2000-9655

### Summary of Invention

### Technical Problem

On a sample testing device, reliable sample testing depends on checks before light absorbance measurement as to whether a sample is put in the sample container loaded in the chip (i.e., the presence or absence of the sample) and whether the amount of sample present in the sample container is sufficient for testing (the amount of sample present). Information on the presence or absence of a sample and the amount of sample present will herein be referred to also as target object information. For different items of testing on the sample, different chips are used (because, for different chips used, test reagents differ). It is therefore preferable to pay attention to stable acquisition of target object information with each chip used. Inconveniently, known sample testing devices leaves room for stable acquisition of target object information with each chip used.

Devised to solve the problem mentioned above, the present invention is aimed at providing a testing device and a method and a program for information processing that permit stable acquisition of target object information with each chip used.

### Solution to Problem

According to one aspect of the present invention, a testing device includes: at least one light source that can be lit at different positions; a light source control unit that controls the lighting of the at least one light source; a rotation mechanism that rotates a chip loaded with a storage container for storing a test object; an imaging unit that acquires a plurality of individual images by shooting, at each of the different positions at different times respectively, the chip located, by being rotated by the rotation mechanism, in an illuminated area illuminated by the lighting of the at least one light source; an image generation unit that generates an analysis image based on the plurality of individual images; and an information acquisition unit configured to acquire target object information on the state of the test object or of the storage container based on the analysis image. Here, the brightness value of each pixel in the analysis image is calculated using the brightness values of the pixels at the same position among the plurality of individual images.

According to another aspect of the present invention, an information processing method includes: a step of rotating a chip loaded with a storage container storing a test object to locate the chip in an illuminated area; a step of lighting at least one light source to shine light onto the chip located in the illuminated area; a step of shooting the chip illuminated by the light source to acquire an individual image; a step of, after shooting the chip, lighting at least one light source at a position different from the position at which the chip was previously shot, to shine light onto the chip located in the illuminated area; a step of shooting the chip illuminated by the light source at the different position to acquire another individual image; a step of generating an analysis image based on the plurality of individual images acquired; a step of acquiring target object information on the state of the test object or of the storage container based on the analysis image. Here, the brightness value of each pixel in the analysis image is calculated using the brightness values of the pixels at the same position among the plurality of individual images.

According to yet another aspect of the present invention, a program is for making a computer carry out the information processing method described above.

### Advantageous Effects of Invention

According to the present invention, it is possible to acquire target object information with each chip used.

### Brief Description of Drawings

Fig. 1 is a sectional view showing the internal construction of a sample testing device according to one embodiment of the present invention
Fig. 2 is a front view showing, on an enlarged scale, a sample container and a chip placed in the sample testing device.
Fig. 3 is a perspective view, as seen from below, of an illumination board arranged in a testing chamber.
Fig. 4 is a block diagram showing the hardware configuration of the sample testing device.
Fig. 5 is a flow chart showing the procedure of a method of acquiring target object information on the sample testing device.
Fig. 6 is an illustrative diagram schematically showing a plurality of individual images acquired on the sample testing device.
Fig. 7 is an illustrative diagram schematically showing an analysis image generated based on the plurality of individual images.
Fig. 8 is a graph of a normalized distribution of the brightness values of the pixels at a given same position among the plurality of individual images.
Fig. 9 is an illustrative diagram schematically showing an analysis image generated with no sample stored in the sample container.
Fig. 10 is an illustrative diagram schematically showing a distribution of brightness value differences between a first and a second analysis image in a case where the sample is blood.
Fig. 11 is an illustrative diagram schematically showing a distribution of brightness value differences between a first and a second analysis image in a case where the sample is blood plasma.
Fig. 12 is an illustrative diagram schematically showing parts of the first and second analysis images, respectively, acquired before and after the chip is rotated.
Fig. 13 is an illustrative diagram schematically showing a distribution of differences of width-direction average values.
Fig. 14 an illustrative diagram schematically showing the mechanism by which the peculiar spots appear.
Fig. 15 is an illustrative diagram showing another example of the analysis image.
Fig. 16 is an illustrative diagram schematically showing a distribution, on one line, of differences of width-direction average values between a first and a second analysis image as obtained with respect to a particular chip.
Fig. 17 is an illustrative diagram schematically showing a composite analysis image.
Fig. 18 is an illustrative diagram schematically showing a temporal flow of light absorbance measurement achieved by shooting the chip in two stages.
Fig. 19 is an illustrative diagram schematically showing the relationship between target object information acquired by shooting the chip in two stages and the result of judging the state of the sample or of the sample container.
Fig. 20 is an illustrative diagram showing models of a first and a second window-part analysis image.
Fig. 21 is a plan view showing, on an enlarged scale, an inspection portion of the chip.
Fig. 22 is an illustrative diagram showing a distribution of brightness value differences acquired when the inspection portion of the chip has a ripple structure.
Fig. 23 is an illustrative diagram showing a distribution of brightness value differences acquired when the inspection portion does not have a ripple structure.
Fig. 24 is an illustrative diagram showing a given individual image of the inspection portion.
Fig. 25 is a block diagram schematically showing another configuration of the sample testing device.

### Description of Embodiments

Hereinafter, illustrative embodiments of the present invention will be described with reference to the accompanying drawings.

### [1. Outline of a Sample Testing Device]

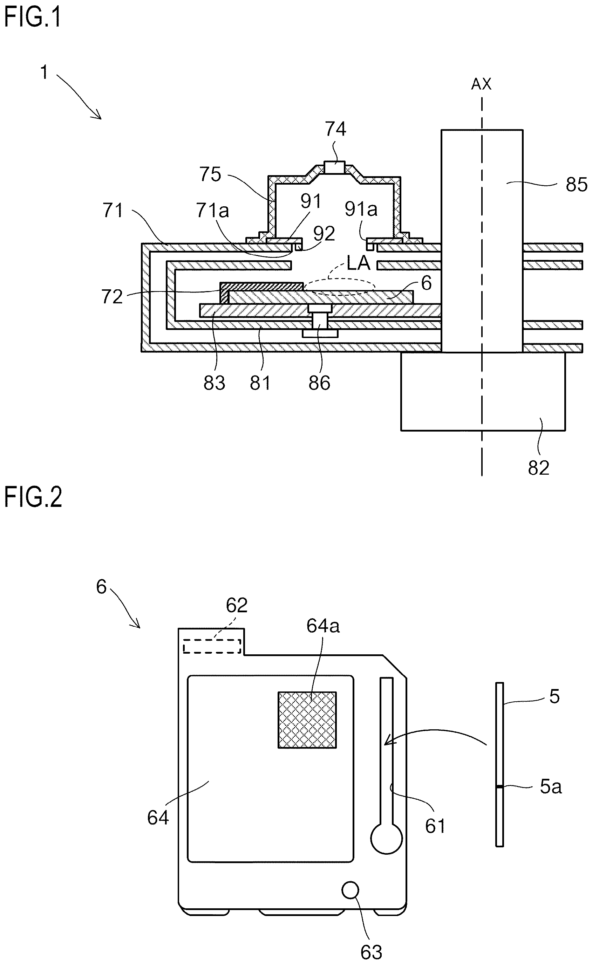

Fig. 1 is a sectional view showing the internal construction of a sample testing device 1 as one example of a testing device according to an embodiment of the present invention. The sample testing device 1 has a testing chamber 71 inside a housing. The testing chamber 71 is where a chip 6 loaded with a sample container 5 is placed and various kinds of measurement are performed on the sample in the chip 6. The chip 6 placed in the testing chamber 71 is held in place by being pressed against a first stage 83 by a holder 72.

The sample container 5 is one example of a storage container for storing a test object, and is also called a capillary or a capillary tube. A sample collected from a test subject is put in the sample container 5. The sample is one example of a test object tested on the sample testing device 1, and is, for example, blood (also called whole blood) or blood plasma. A possible case where the sample is blood plasma is, for example, when use is made of blood plasma already extracted from blood by centrifugal separation.

The chip 6 previously includes a test reagent corresponding to the intended testing item. Different testing items include, to name four, Hb (hemoglobin) A1c as an indicator of diabetes, CPR (C-reactive protein) and hsCRP (high-sensitivity CRP) as makers of inflammation, and CysC (cystatine C) as an indicator used in kidney function testing.

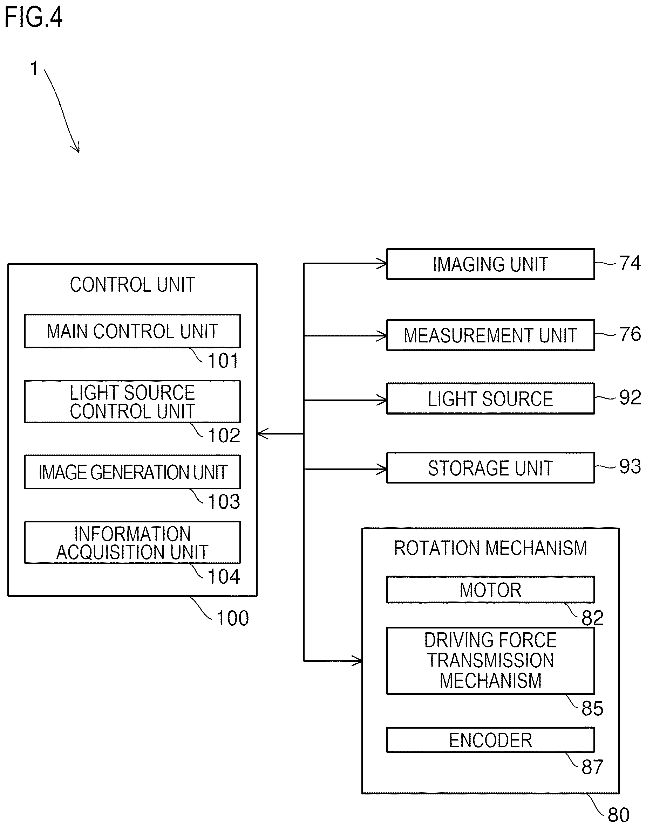

With the chip 6 held on the first stage 83, pressing a Start button (not illustrated) makes the chip 6 start to be rotated, and a given component (e.g., blood plasma) contained in the sample is centrifugally separated. The centrifugally separated component reacts with the reagent in the chip 6 to yield a reaction product. The light absorbance of the reaction product is measured by a measurement unit 76 (see Fig. 4), and the measurement result is output on recording paper or the like.

### [2. Sample Container and Chip]

Fig. 2 is a front view showing, on an enlarged scale, the sample container 5 and the chip 6. The sample container 5 is on its surface marked with a black marker 5a that roughly indicates the amount of sample necessary for testing. The necessary amount of sample varies with the kind of sample tested. Accordingly, the position at which the sample container 5 is marked with the marker 5a varies with the kind of sample. A user (doctor, clinical technician, or the like) can, by putting the sample in the sample container 5 with the marker 5a as a guide, put the necessary amount of sample in the sample container 5 for each sample to be tested.

The chip 6 is composed of a base and a cover bonded together. The base and the cover are formed of materials suitable for each chip 6 (test reagent) with consideration given to chemical resistance, water repellency in an interior passage (sample fluidity), thermal contraction during fabrication, and the like. For example, in a chip 6 for HbAlc as a testing item, both the base and the cover are formed of polypropylene resin (opaque white). In chips for the other three testing items, the base (black) is formed of polystyrene resin containing carbon black and the cover (transparent) is formed of polystyrene resin with a fluorine-based coating.

So structured, the chip 6 has a container compartment 61, a measured portion 62, an inspection portion 63, and a label 64. The container compartment 61 is where the sample container 5 is fitted and accommodated. For easy fitting of the sample container 5, the container compartment 61 is formed in a shape slightly larger than the outline of the sample container 5.

The chip 6 has formed inside it a micropassage (not illustrated), and the sample in the sample container 5 accommodated in the container compartment 61 flows through the micropassage under the centrifugal force that acts when the chip is rotated. Midway along the micropassage, a reagent reservoir (not illustrated) is provided such that, of the sample flowing through the micropassage, the centrifugally separated component reacts with the test reagent stored in the reagent reservoir. Under the centrifugal force just mentioned, the reaction product flows toward the measured portion 62, and in the measured portion 62, the light absorbance of the reaction product is measured by the measurement unit 76.

The inspection portion 63 is a window for detecting the sample, and is provided at a position that, as the chip 6 is rotated, the sample in the sample container 5 passes through the micropassage and reaches at the lapse of a predetermined time (e.g., five minutes) from the start of measurement. More specifically, the inspection portion 63 is located in a passage through which part of the sample in the sample container 5 other than the necessary amount of it flows as waste liquid as the chip 6 is rotated by a rotation mechanism 80 (see Fig. 4), which will be described later. By optically sensing the presence or absence of the sample having reached the inspection portion 63 with a sensor unit (not illustrated) provided in the device, it is possible to judge the presence or absence of the sample and the amount of sample present in the sample container 5. For example, if at the lapse of five minutes from the start of measurement the sensor unit cannot sense the sample (waste liquid) in the inspection portion 63, it is possible to judge that less than the necessary amount of sample or no sample at all is present in the sample container 5. It is however difficult to acquire information on the presence or absence of the sample and the like stably for any chip 6 for various reasons such as the viscosity of the reaction product varying from one chip 6 (testing item) to another, the color of the reaction product varying according to the kind of sample (whole blood, blood plasma), the color of the reaction product varying from one sample to another because of the color of blood plasma varying from one individual to another. To cope with that, in this embodiment, stable acquisition of information on the presence or absence of the sample and the like is achieved by methods that will be described later.

The label 64 is affixed to the surface of the chip 6, and has a two-dimensional code 64a on it. The two-dimensional code 64a represents identification information for distinguishing the above-mentioned four testing items with respect to the sample as the test object. The chip 6 contains in it a test reagent corresponding to the testing item indicated by the identification information represented by the two-dimensional code 64a.

The two-dimensional code 64a is read by an imaging unit 74. Thus, based on the identification information represented by the two-dimensional code 64a thus read, the device can judge which of the four testing items the chip 6 placed in the sample testing device 1 is for the testing of. The label 64 may include any information (e.g., the manufacturing number, manufacturing date, manufacturer, and the like of the chip 6) other than the identification information mentioned above.

### [3. Details of the Sample Testing Device]

Next, the sample testing device 1 will be described in detail with reference once again to Fig. 1. Above the testing chamber 71, the imaging unit 74 is provided for reading the two-dimensional code 64a on the chip 6 as described above. The imaging unit 74 is configured, for example, as a camera that acquires a color image by shooting it. The imaging unit 74 is held above the testing chamber 71 by a holder 75.

The sample testing device 1 further includes the measurement unit 76 (see Fig. 4). The measurement unit 76 optically measures the light absorbance of the reaction product that passes through the micropassage in the chip 6 and reaches the measured portion 62, and based on the rate of increase of the light absorbance calculates the concentration of the testing item (e.g., CRP) contained in the sample.

In the testing chamber 71, a rotary table 81 is provided. The rotary table 81 rotates about a rotation axis AX by being driven by a motor 82. Above the rotary table 81, the first stage 83 and a second stage (not illustrated) are provided. The first stage 83 and the second stage are arranged at positions point-symmetric with respect to the rotation axis AX as seen from a direction along the rotation axis AX.

On the first stage 83, the chip 6 described above is placed. On the second stage, a balancer chip is placed to keep a balance with the chip 6. The first stage 83 and the second stage are coupled to a driving force switching mechanism 85, which includes a gear and a cam. The driving force switching mechanism 85 switches the destination to which to transmit the driving force of the motor 82 between the first stage 83 and the second stage. In this way, whether to rotate the first stage 83 and the second stage is switched, and the direction in which the centrifugal force acts on the chip 6 during the rotation of the rotary table 81 is switched. By switching the rotation of the first stage 83 and the second stage in that way, it is possible to control the direction in which the sample flows inside the chip 6.

The first stage 83 spins (rotates) about a first planetary shaft 86 fitted to the rotary table 81. The first planetary shaft 86 is located away from the rotation axis AX of the rotary table 81 in the radial direction, parallel to the rotation axis AX. Thus, the first stage 83 can rotate about the first planetary shaft 86 and revolves around the rotation axis AX. Likewise, the second stage spins (rotates) about a second planetary shaft (not illustrated) fitted to the rotary table 81. The second planetary shaft is located at the side opposite from the first planetary shaft 86 with respect to the rotation axis AX of the rotary table 81, parallel to the rotation axis AX. Thus, the second stage can rotate about the second planetary shaft and revolves around the rotation axis AX.

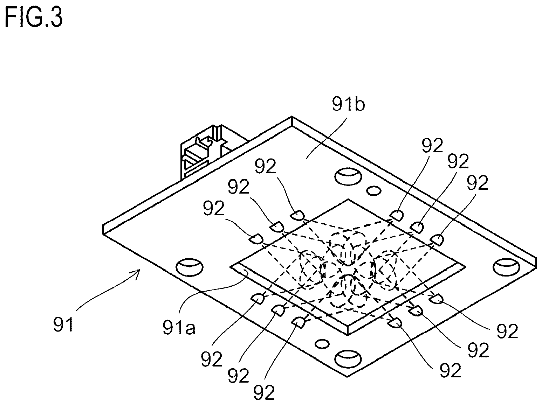

The testing chamber 71 is fitted with an illumination board 91 for illuminating the label 64 on the chip 6. Fig. 3 is a perspective view of the illumination board 91 as seen from below. The illumination board 91 has formed in it an opening 91a substantially in a square shape as seen in a plan view. The imaging unit 74 shoots the label 64 on the chip 6 through the opening 91a in the illumination board 91 to read the two-dimensional code 64a. As will be described later, also when acquiring an image by shooting the sample container 5 accommodated in the chip 6, the imaging unit 74 shoots the sample container 5 through the opening 91a.

On the bottom face 91b of the illumination board 91, a plurality of light sources 92 are fitted at different positions respectively. In this embodiment, a total of 12 light sources 92, with three of them along each of the four sides of the opening 91a, are fitted to the illumination board 91. This however is not meant to limit the number of light sources 92 to twelve. Each light source 92 is, for example, a red LED that emits red light, but may be an LED that emits light of a different wavelength than red. Each light source 92 shines light onto the label 64 on the chip 6 placed on the first stage 83 (Fig. 1) and thereby illuminates the label 64. Thus the imaging unit 74 can shoot the label 64 under appropriate illuminance and read the two-dimensional code 64a properly.

The area that is illuminated by the light shone from the light sources 92 will be referred to as the illuminated area LA. The chip 6 is rotated by the motor 82 so that the label 64 will be located in the illuminated area LA, and the two-dimensional code 64a on the label 64 located in the illuminated area LA is read by the imaging unit 74.

While the description proceeds assuming that 12 (a plurality of) light sources 92 are provided, one light source 92 may be provided instead. For example, one light source 92 may be moved by a driving unit (e.g., a motor) so as to be located at different positions and be lit at each of those positions.

### [4. Acquiring Target Object Information]

Information on the state of the test object or of the storage container for it will be referred to also as "target object information." Target object information includes, for example, whether a sample is present or absent in the sample container 5, whether the necessary amount of sample is present in the sample container 5, and whether the sample container 5 itself is accommodated in the chip 6. The image data (pixel value) of each pixel in an image acquired by shooting by the imaging unit 74 will be referred to also as a "brightness value." A brightness value can take a value in the range from 0 (dim) to 255 (bright) in eight-bit representation.

As described above, the sample testing device 1 is from the beginning provided with a plurality of light sources 92 and an imaging unit 74 for reading the label 64 on the chip 6. Thus, using the plurality of light sources 92 and the imaging unit 74, the sample testing device 1 can directly shoot the sample container 5 accommodated in the chip 6 to acquire an image and acquire target object information based on the acquired image. For example, in a case where the sample is blood, in the acquired image, the blood appears dimmer (with lower brightness values) than elsewhere. Accordingly, based on the brightness values of the pixels, it is possible to judge the presence or absence and the amount of blood. Moreover, since target object information can be acquired based on the above-mentioned image before a component contained in the sample is centrifugally separated, it is possible to acquire the target object information quickly compared with depending solely on a method of first starting centrifugal separation and then detecting the sample having reached the inspection portion 63 at the lapse of a predetermined time therefrom to acquire target object information. Moreover, since the target object information is acquired before the reaction product is yielded, it is possible to acquire target object information with any of the chips 6 without giving consideration to the viscosity of the reaction product, the color of the reaction product, and the like. It is thus possible to acquire target object information quickly and stably with any of the chips 6.

Inconveniently, shooting the sample container 5 with all of the plurality of light sources 92 lit simultaneously may cause the acquired image to show regions with high brightness values, called "blown-out highlights," corresponding to the individual light sources 92, resulting in noticeable brightness unevenness in the image. Such brightness unevenness hampers accurate acquisition of target object information based on the image and has to be reduced.

Schemes for reducing brightness unevenness resulting from simultaneous lighting of the plurality of light sources 92 include, for example, (1) reducing the amounts of light emitted from the individual light sources 92, (2) fine-adjusting the amounts of light emitted from the individual light sources 92 so that they are equally bright, and (3) arranging a diffuser plate in the optical path between the light sources 92 and the chip 6 (in particular, the sample container 5).

Inconveniently, scheme (1) above makes the illuminated area LA dimmer, and makes it difficult to accurately acquire target object information based on the image acquired by the imaging unit 74 shooting the sample container 5 located in the illuminated area LA. Scheme (2) above requires high accuracy in fine-adjusting the amounts of emitted light, and leaves it difficult to reduce brightness unevenness. Scheme (3) requires a space to arrange the diffuser plate in, and may lead to an increased size of the device. It may be simply impossible to arrange a diffuser plate at all in a design where, for compactness' sake, only a gap as small as about 2 mm can be secured immediately below the illumination board 91.

Brightness unevenness as mentioned above may occur also in a construction provided with only one light source 92 (one where one light source 92 is moved by a driving unit). Specifically, shooting the sample container 5 with the imaging unit 74 while lighting one light source 92 movable by the driving unit at a desired position causes high-brightness regions to appear in the acquired image depending on the position of the light source 92, resulting in brightness unevenness.

To cope with that, in this embodiment, the configurations presented below are used to make it possible to acquire target object information stably with any of chips 6 for different test items, and to acquire target object information accurately while reducing brightness unevenness by a simple method without increasing device size.

### [5. Hardware Configuration of a Sample Testing Device]

Fig. 4 is a block diagram showing the hardware configuration of the sample testing device 1. The sample testing device 1 includes, in addition to the blocks described above, a rotation mechanism 80 and a control unit 100. The rotation mechanism 80 is a mechanism for rotating the chip 6, and is configured to include, in addition to the motor 82 and the driving force transmission mechanism 85 described above, an encoder 87. The encoder 87 is an example of a rotational position sensing unit for sensing the rotational position of the motor 82 (driving unit).

The control unit 100 is configured, for example, with a central processing unit abbreviated as CPU, and is configured to include a main control unit 101, a light source control unit 102, an image generation unit 103, and an information acquisition unit 104. The main control unit 101 controls the operation of different blocks in the sample testing device 1.

The light source control unit 102 controls the lighting of at least one light source 92. Specifically, the light source control unit 102 lights 12 light sources 92 one by one at different times. Instead, the 12 light sources 92 may be divided into six groups each consisting of two of them, in which case the light source control unit 102 may light the light sources 92 in the same group simultaneously and light the different groups at different times. The number of light sources 92 in each group may be three, four, or six. In a configuration as described above where one light source 92 is moved to different positions by a driving unit, the light source control unit 102 may light the light source 92 at the different positions at different times respectively. That is, the sample testing device 1 of this embodiment includes a light source control unit 102 that lights at least one light source 92 that can be lit at different positions so as to light it at the different positions at different times respectively.

Moreover, in a configuration where one light source 92 is moved to different positions by a driving unit, the light source control unit 102 may keep the one light source 92 lit all the time while the driving unit moves the lit light source 92 to different positions.

The image generation unit 103 generates an image for analysis (analysis image) based on individual images acquired by the imaging unit 74 shooting at different times with the light source 92 lit at different positions respectively. Based on the analysis image generated by the image generation unit 103, the information acquisition unit 104 acquires target object information as mentioned previously.

The sample testing device 1 further includes a storage unit 93. The storage unit 93 is a memory that stores an operation program for the control unit 100 and various kinds of information. The storage unit 93 is configured to include ROM (read-only memory), RAM (random-access memory), non-volatile memory, and the like. For example, the individual images acquired by the imaging unit 74, the analysis image generated by the image generation unit 103, and the target object information acquired by the information acquisition unit 104 are stored in the storage unit 93, and are wherever necessary read from the storage unit 93.

### [6. Methods of Acquiring Target object information]

Specific methods of acquiring target object information with the configuration described above will be described.

### (6-1. Method Using Brightness Values Themselves)

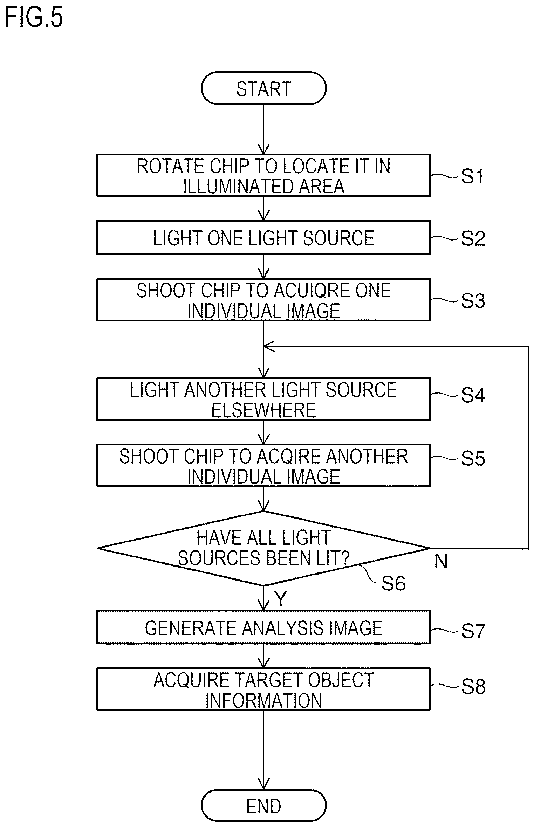

Fig. 5 is a flow chart showing the procedure of a method of acquiring target object information. First, when a chip 6 is placed on the first stage 83 in the testing chamber 71, the rotation mechanism 80 rotates the rotary table 81 and the first stage 83 so that the chip 6 will be located in the illuminated area LA of the light sources 92 (S1).

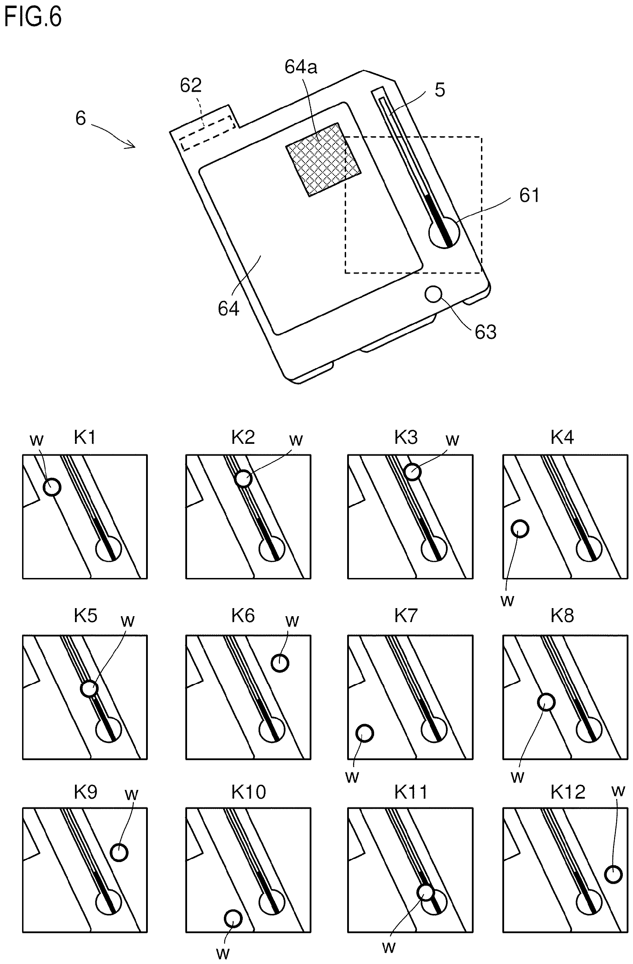

Next, under the control of the light source control unit 102, one of the light sources 92 is lit to shine light onto the chip 6 located in the illuminated area LA (S2). Subsequently, the chip 6 illuminated by the light source 92 in step S2 is shot by the imaging unit 74 to acquire one individual image K1 (S3). The imaging unit 74 has its angle of field preset in a range in which it reads the two-dimensional code 64a on the label 64, and thus the imaging unit 74 acquires the individual image K1 by reading not the entire chip 6 but only part of it (e.g., the area enclosed by a broken line in Fig. 6).

Next, under the control of the light source control unit 102, another light source 92 at a different position than the light source 92 lit in step S2 is lit at a different time than the light source 92 lit previously, to shine light onto the chip 6 located in the illuminated area LA (S4). Subsequently, the chip 6 illuminated by the currently lit light source 92 in step S4 is shot by the imaging unit 74 to acquire another individual image K2 (S5).

Steps S4 and S5 described above are performed for each of the 12 light sources 92 (S6). In this way, as the light sources 92 are lit at different times, the imaging unit 74 acquires 12 individual images K1 to K12 respectively.

Fig. 6 schematically shows the 12 individual images K1 to K12 acquired as the 12 light sources 92 are lit respectively. As mentioned previously, in the illumination board 91, the 12 light sources 92 are fitted at different positions, and illuminate the chip 6 from different directions. Thus, the individual images K1 to K12 show blown-out highlight regions w (high-brightness regions) characteristic of point light sources, reflecting the positions of the light sources 92 respectively.

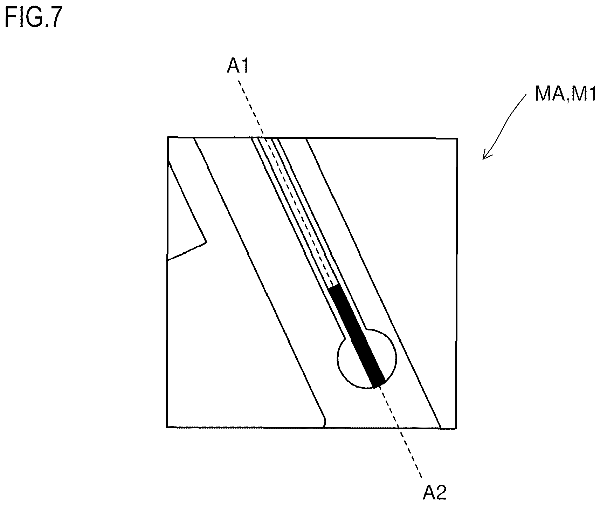

Next, the image generation unit 103 calculates the simple average values of the brightness values of the pixels at the same positions among the individual images K1 to K12, and generates an analysis image MA which is a set of pixels that have the thus calculated simple average values as their brightness values (S7). Fig. 7 schematically shows the analysis image MA generated by the image generation unit 103.

Subsequently, the information acquisition unit 104 acquires target object information based on the brightness values of the pixels on a previously set one line (in Fig. 7, along direction A1-A2) in the analysis image MA generated in step S7.

For example, in a case where the sample is blood, in the analysis image MA, the blood appears dim (with low brightness values). Accordingly, the information acquisition unit 104 can judge the presence or absence of blood in the sample container 5 based on whether there is any pixel with a brightness value equal to or less than a threshold value TH1 on the above-mentioned one line and acquire information on the presence or absence of blood. The information acquisition unit 104 can also judge the amount of blood present in the sample container 5 by counting the number of pixels with a brightness value equal to or less than the threshold value TH1 on the above-mentioned one line in the analysis image MA. The information acquisition unit 104 can then, by comparing the number of pixels counted with the number of pixels on the above-mentioned one line that corresponds to the necessary amount of blood, judge whether the necessary amount of blood is present in the sample container 5 and acquire information on the amount of sample (amount of blood) as target object information.

Also in a case where the sample is blood plasma, by a method similar to that described above, the information acquisition unit 104 can judge whether blood plasma is present or absent in the sample container 5 and whether the necessary amount of blood plasma is present in the sample container 5.

By a method similar to that described above, the information acquisition unit 104 can further judge whether the sample container 5 is accommodated in the container compartment 61 in the chip 6 and acquire information on the accommodation state of the sample container 5 as target object information.

While the description above deals with an example where the 12 light sources 92 are lit sequentially one at a time to acquire 12 individual images K1 to K12, instead the light source 92 may be lit sequentially two, three, or four at a time to acquire individual images six, four, or three at a time respectively.

Instead, in a configuration where one light source 92 is moved by a driving unit, the light source 92 may be lit at each of the position before its movement and the position after its movement (i.e., a position different from the previous one) (i.e., one light source 92 may be lit at different positions at different times respectively) to acquire a plurality of individual images. Instead, while one light source 92 is kept lit it may be moved to different positions, and the imaging unit 74 may shoot the chip 6 at different positions at different times respectively to acquire a plurality of individual images.

The image generation unit 103 may generate the analysis image MA using values (brightness values) slightly deviated from simple average values, or may generate the analysis image MA using median values of brightness values.

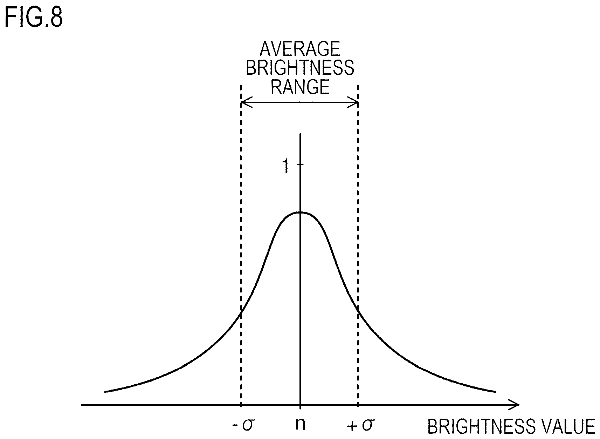

Fig. 8 is a graph showing a normalized distribution of the brightness values of the pixels at a given same position among a plurality of individual images. In the graph of Fig. 8, let the average brightness value be n and let the standard deviation be σ, then an average brightness range is the range n ± σ. Each pixel in the analysis image MA may have a brightness value corresponding to a deviation value within the average brightness range.

As described above, a sample testing device 1 according to this embodiment includes: an imaging unit 74 that acquires a plurality of individual images K1 to K12 by shooting a chip 6 located in an illuminated area LA illuminated by lighting at least one light source 92, with the light source 92 lit at different positions at different times respectively; an image generation unit 103 that generates an analysis image MA based on the plurality of individual images K1 to K12; and an information acquisition unit 104 that acquires target object information based on the analysis image MA.

On the other hand, an information processing method according to this embodiment includes: a step (S1) of (a rotation mechanism 80) rotating a chip 6 to locate it in an illuminated area LA; a step (S2) of (a light source control unit 102) lighting at least one light source 92 to shine light onto the chip 6; a step (S3) of (an imaging unit 74) shooting the chip 6 to acquire an individual image (e.g., an individual image K1); a step (S4) of, after the shooting of the chip 6, (the light source control unit 102) lighting at least one light source 92 at a position different from the position at which the chip 6 was previously shot, to shine light onto the chip 6 located in the illuminated area LA; a step (S5) of (the imaging unit 74) shooting the chip 6 illuminated by the light source 92 at the different position to acquire another individual image (e.g., an individual image K2); a step (S7) of (the information generation unit 103) generating an analysis image MA based on the plurality of individual images acquired; and a step (S8) of (the information acquisition unit 104) acquiring target object information based on the analysis image MA.

By directly shooting the chip 6 with the imaging unit 74 to acquire the individual images K1 to K12 and generating the analysis image MA based on them, it is possible, as mentioned above, to acquire target object information stably based on the analysis image MA with any chip 6 without being affected by, for example, the viscosity of the reaction product of a given component in the sample with the test reagent.

In particular, the imaging unit 74 acquires the plurality of individual images K1 to K12 by shooting the container compartment 61 in the chip 6 located in the illuminated area LA by the rotation mechanism 80. This permits quick acquisition (e.g., in several minutes from the start of measurement) of, as target object information, information on whether the sample container 5 is accommodated in the container compartment 61 and whether a sample is present or absent in the sample container 5 accommodated in the container compartment 61.

The brightness value of each pixel in the analysis image MA is calculated using the brightness values of the pixels at the same position among the plurality of individual images K1 to K12; thus, as mentioned above, the simple average value of the brightness values of the pixels at the same position among the individual images K1 to K12, a value within the average brightness range, or the like can be used as the brightness value of each pixel in the analysis image MA. Thus, even if the individual images K1 to K12 show blown-out highlight regions w (see Fig. 6) resulting from the lighting of the light sources 92, the brightness values in the regions of the analysis image MA corresponding to the blown-out highlight regions w in the individual images K1 to K12 are shifted to the low-brightness side compared with the brightness values in the blown-out highlight regions w, and this makes the "blown-out highlights" less noticeable. Thus, the information acquisition unit 104 can accurately acquire target object information based on the analysis image MA. Moreover, brightness unevenness can be reduced without arranging an extra member such as a diffuser plate between the light source 92 and the chip 6 and without fine-adjusting the amounts of light emitted among the plurality of light sources 92. It is thus possible to accurately acquire target object information while reducing brightness unevenness by a simple method without increasing device size.

The disuse of a diffuser plate contributes to space saving, and the reduced number of components helps reduce the failure rate of the device. Furthermore, with the method according to this embodiment, it is possible to acquire target object information without changing the structure of the chip 6 and hence with no increase, ascribable to a change in chip structure, in the amount of sample, and this helps reduce the burden on the test subject during blood drawing. Moreover, it is possible to acquire target object information such as the presence or absence of a sample in a short time, and this helps enhance usability.

In particular, the sample testing device 1 has a plurality of light sources 92. The light source control unit 102 lights the plurality of light sources 92 at different positions at different times respectively. This configuration, as compared with one where one light source 92 is moved to different positions by a driving unit so as to illuminate the chip 6 from the different positions, does not require a space to arrange the driving unit in, and contributes to reduced device size. There is also no need to control the driving unit.

Each pixel in the analysis image MA has a brightness value within the average brightness range, and thus has the average value, or a value close to the average value, of the brightness values of the pixels at the same position among the individual images K1 to K12. It is thus possible to reliably shift the brightness values in regions in the analysis image MA corresponding to blown-out highlight regions w to the low-brightness side compared with the brightness values in the blown-out highlight regions w. It is thus possible to reliably generate an analysis image MA with reduced brightness unevenness.

As mentioned previously, the average brightness range is the range of brightness values that fall within the range of n - α or more but n + σ or less in the normal distribution of brightness values with respect to pixels at the same position. Any brightness value within the range n ± σ, if not an average brightness value itself, is acceptable as a value representing an average brightness value, and using such brightness values too it is possible to obtain the benefits of this embodiment described previously.

The information acquisition unit 104 acquires target object information based on the brightness values of the pixels on a previously set one line (along direction A1-A2) (S8). Since the target object information is acquired using the very brightness values of the pixels on one line in the analysis image MA, it is possible to acquire target object information more easily than with the method described later that generates a plurality of analysis images and acquires target object information based on brightness value differences among them.

The brightness values of each pixel in the analysis image MA is an average brightness value calculated by averaging the brightness values of the pixels at the same positions among the plurality of individual images K1 to K12. The brightness values (high brightness values) in blown-out highlight regions w that appear in the individual images K1 to K12 resulting from the lighting of the light sources 92 are, in the analysis image MA, replaced with average brightness values. This eventually results in reliably lower brightness values there, making blown-out highlight regions less noticeable. Thus, the information acquisition unit 104 can accurately acquire target object information based on the analysis image MA.

In particular, an average brightness value is the simple average value of the brightness values of the pixels at the same position among the individual images K1 to K12. In this case, the average brightness value can be determined easily by calculation, and thus the image generation unit 103 can generate the analysis image MA easily based on the plurality of individual images K1 to K12.

The average brightness value mentioned above may be a weighted average value. For example, the average brightness values may be a weighted average value resulting from averaging the brightness values of the pixels at the same position among the plurality of individual images K1 to K12 with weights given them based on the positions of the light sources 92 or the amounts of light emitted from the light sources 92. The weights are set, for example, to increase with increasing distance from the light sources 92 to the illuminated area LA and to increase with decreasing amount of light emitted from the light source 92.

Also when such weighted average values are used, in the analysis image MA, the brightness value of each pixel is averaged among the plurality of individual images K1 to K12, and this makes the "blown-out highlights" in regions corresponding to blown-out highlight regions w less noticeable. As a result, the information acquisition unit 104 can accurately acquire target object information based on the analysis image MA.

In this embodiment, the test object is a sample, and the target object information includes information on at least one of whether a storage container (sample container 5) is accommodated in the chip 6, whether a sample is present or absent in the storing container, the kind of sample (blood, blood plasma), and the amount of sample present in the storage container. In this case, the information acquisition unit 104 can accurately acquire information on the presence or absence of the storing container and the like based on the analysis image MA with reduced brightness unevenness.

The sample testing device 1 according to this embodiment includes the measurement unit 76. With a configuration where a sample is tested based on the light absorbance measured by the measurement unit 76, it is possible to accurately acquire target object information by the method described above.

### (6-2. Method Using Brightness Value Differences)

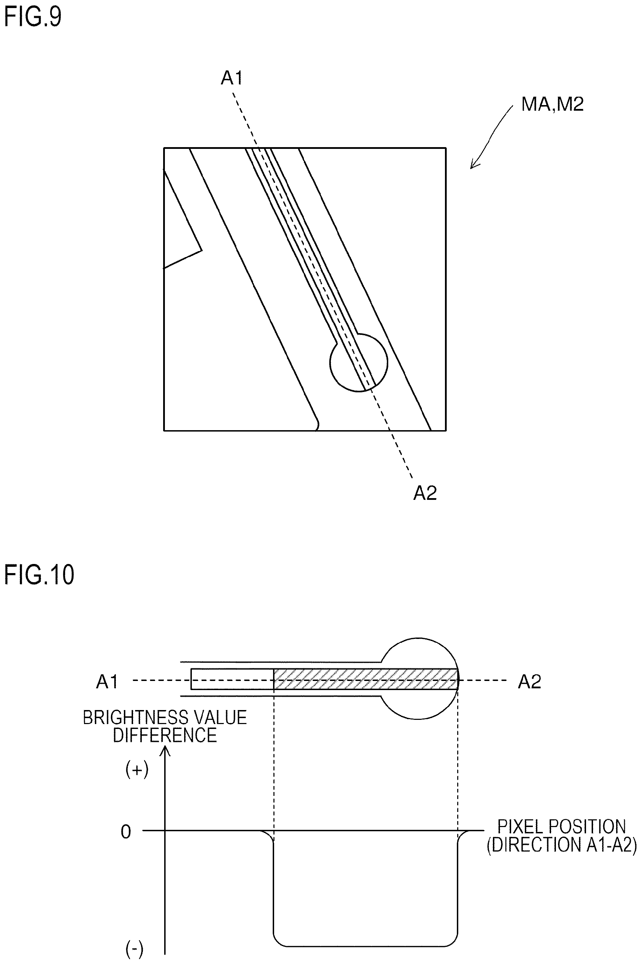

Next, as another method of acquiring target object information, a description will be given of a method using brightness value differences between two analysis images. First, the analysis image MA shown in Fig. 7 will be referred to as the first analysis image M1. That is, the analysis image MA that the image generation unit 103 generates with a sample put in the sample container 5 will be referred to as the first analysis image M1. On the other hand, Fig. 9 shows an analysis image MA that the image generation unit 103 generates with no sample put in the sample container 5. Here, for distinction from the first analysis image M1 in Fig. 7, the analysis image MA in Fig. 9 will be referred to as the second analysis image M2.

The information acquisition unit 104 acquires target object information based on the differences of the brightness values of the pixels at the same positions between the first and second analysis images M1 and M2. Fig. 10 schematically shows the distribution of brightness value differences between the first and second analysis images M1 and M2 with respect to the pixels on one line (along direction A1-A2) in Figs. 7 and 9. It is here assumed that the distribution in Fig. 10 is one observed when the sample put in the sample container 5 is blood. Moreover, for convenience's sake, the marker 5a on the surface of the sample container 5 will here be ignored.

The light sources 92 have light-source unevenness among them. Light-source unevenness can include, for example, radiation unevenness (unevenness of radiation angles) among the individual light sources 92, mounting unevenness (unevenness of the fitting angles of the light sources 92 with respect to the illumination board 91), etc. Such light-source unevenness among the light source 92 affects the analysis image MA. Thus, light-source unevenness can hamper accurate acquisition of target object information by the information acquisition unit 104 based on the analysis image MA.

When the image generation unit 103 generates a first analysis image M1 as an image taken with a sample present and a second analysis image M2 as an image taken with no sample, the light-source unevenness affects both the first and second analysis images M1 and M2. Accordingly, by calculating the differences of the brightness values of the pixels at the same positions between the first and second analysis images M1 and M2, it is possible to cancel or reduce the effect of light-source unevenness mentioned above. Thus, even if there is light-source unevenness, based on the above-mentioned brightness value differences, the information acquisition unit 104 can accurately acquire target object information and guarantees stable information acquisition performance.

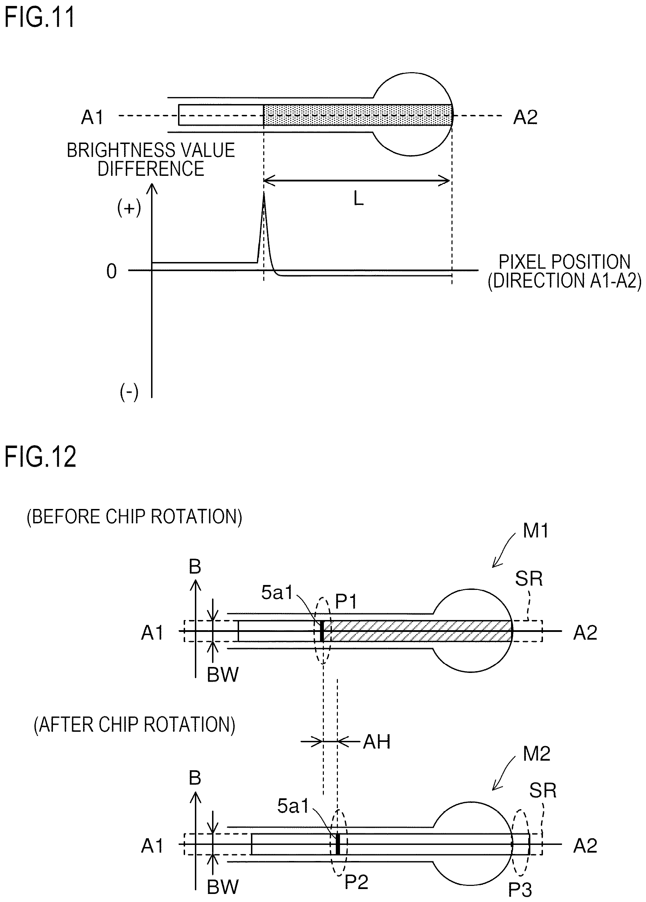

Fig. 11 schematically shows a distribution of brightness value differences between the first and second analysis images M1 and M2 with respect to the pixels on a previously set one line (along direction A1-A2) when the sample is blood plasma. Also in Fig. 11, for convenience' sake, the marker 5a on the surface of the sample container 5 is ignored.

In a case where the test object is close-to-transparent liquid such as blood plasma, in an end part (end face) of the blood plasma in the sample container 5, the light from the light sources 92 is refracted to appear bright (what is called the lens effect). Thus, the analysis image MA exhibits high brightness values at the positions of pixels corresponding to an end part of the blood plasma.

As described above, taking brightness value differences between the first and second analysis images M1 and M2 cancels the effect of light-source unevenness, and thus in the above-mentioned distribution of brightness value differences, high brightness values are noticeably observed at the positions of pixels corresponding to an end part of blood plasma. Thus, in a case where the sample is blood plasma, based on the above-mentioned brightness value differences, the information acquisition unit 104 can accurately recognize the length L corresponding to the amount of blood plasma put in the sample container 5. That is, the above-described method of acquiring target object information based on brightness value differences is very effective especially in cases where the sample is transparent or close-to-transparent liquid.

The first and second analysis images M1 and M2 mentioned above are generated, for example, in the following manner. First, before the rotation of the chip 6 by the rotation mechanism 80, the imaging unit 74 shoots the chip 6 with the light sources 92 lit at different positions at different times respectively to acquire a plurality of first individual images. It is assumed that meanwhile the chip 6 is loaded with a sample container 5 having a sample put in it. After the rotation of the chip 6 by the rotation mechanism 80, the imaging unit 74 shoots the chip 6 with the light sources 92 lit at different positions at different times respectively to acquire a plurality of second individual images. Under the centrifugal force arising from the rotation of the chip 6, the sample put in the sample container 5 flows into the micropassage in the chip 6, and this leaves the sample container 5 with no sample.

The image generation unit 103 generates a first analysis image M1 based on the plurality of first individual images, and generates a second analysis image M2 based on the plurality of second individual images. For example, the image generation unit 103 can, by calculating the simple average values of the brightness values of the pixels at the same positions among the plurality of first individual images, generate the first analysis image M1 composed of a set of pixels with those simple average values. Likewise, the image generation unit 103 can, by calculating the simple average values of the brightness values of the pixels at the same positions among the plurality of second individual images, generate the second analysis image M2 composed of a set of pixels with those simple average values.

The light sources 92 can also have light amount unevenness resulting from their emitting reduced amounts of light due to secular change. The time lag that occurs while the imaging unit 74 is shooting the chip 6 to acquire the plurality of first individual images and the plurality of second individual images is far shorter than the span over which the light sources 92 deteriorate in performance due to secular change. Thus, the imaging unit 74 can, after acquiring the plurality of first individual images, acquire the plurality of second individual images with a reduced effect of light amount unevenness due to secular change in the light sources 92. The image generation unit 103 can, after generating the first analysis image M1, generate the second analysis image M2 based on the plurality of second individual images with a reduced effect of light amount unevenness. As a result, the information acquisition unit 104 can more accurately acquire target object information based on the first and second analysis images M1 and M2, and can reliably guarantee stable information acquisition performance.

The plurality of first individual images and the plurality of second individual images are images acquired by the shooting of the same sample container 5, and the first and second analysis images M1 and M2 are images generated with respect to the same sample container 5. Accordingly, even if the sample container 5 has a scratch on its surface, owing to the information acquisition unit 104 acquiring target object information based on the differences of the brightness values of the pixels at the same positions between the first and second analysis images M1 and M2, it is possible to acquire target object information while canceling the effect of the scratch on the surface of the sample container 5. Thus, also in this respect, the information acquisition unit 104 can accurately acquire target object information.

The above-mentioned second analysis image M2 (the brightness values of its pixels) generated by the image generation unit 103, that is, the second analysis image M2 with respect to the chip 6 with no sample, may be previously stored in the storage unit 93 (see Fig. 4) by default. The information acquisition unit 104 can, when the image generation unit 103 generates the first analysis image M1, read the second analysis image M2 from the storage unit 93 and acquire target object information based on the differences of the brightness values of the pixels at the same positions between the first analysis image M1 generated and the second analysis image M2 read.

Previously storing the second analysis image M2 in the light source 92 helps omit the step of the imaging unit 74, after acquiring a plurality of first individual images, acquiring a plurality of second individual images and the step of the image generation unit 103, based on the plurality of second individual images, generating the second analysis image M2. It is thus possible to quickly acquire target object information based on the first and second analysis images M1 and M2.

### (6-3. Method of Acquiring Target Object Information by Width-Direction Averaging of Brightness Values)

Fig. 12 schematically shows parts of the first and second analysis images M1 and M2, respectively, acquired before and after the rotation of the chip 6. It is here assumed that the first and second analysis images M1 and M2 each include an image 5a1 of the black marker 5a put on the sample container 5.

Note that, between the first and second analysis images M1 and M2, the position of the image 5a1 differs by a distance AH along the direction (direction A1-A2) along one line. This results from the sample container 5 accommodated in the container compartment 61 in the chip 6 moving by the distance AH in direction A2 inside the container compartment 61 under the centrifugal force arising from the rotation of the chip 6.

In the first and second analysis images M1 and M2, a region that includes one line of pixels in direction A1-A2 and a plurality of lines parallel to it will be referred to as the specific region SR. In the first and second analysis images M1 and M2, when the direction of arrays of pixels perpendicular to the just-mentioned one line is referred to as direction B, the width of the specific region SR in direction B is set to be the width of the number of pixels (e.g., 33 pixels) corresponding to the width of the sample container 5.

In each of the first and second analysis images M1 and M2, the information acquisition unit 104 calculates, at the position of each pixel on the above-mentioned one line, a width-direction average value by further averaging brightness values (here, brightness values within the average brightness range) among a plurality of pixels arrayed in direction B within the specific region SR. The information acquisition unit 104 then acquires target object information based on the differences of the width-direction average values between the first and second analysis images M1 and M2.

When the light sources 92 illuminate the chip 6, depending on the material and production precision (scratches, surface roughness) of the sample container 5 accommodated in the chip 6, reflection unevenness may occur on the surface of the sample container 5. Even in such a case, by averaging brightness values within the average brightness range among the plurality of pixels arrayed in direction B within the specific region SR at the position of each pixel on one line, it is possible to reduce variations in brightness values due to reflection unevenness. Thus, by acquiring target object information based on differences of width-direction average values as mentioned above, the information acquisition unit 104 can more accurately acquire target object information while suppressing the effect of not only light source unevenness and light amount unevenness mentioned above but also reflection unevenness.

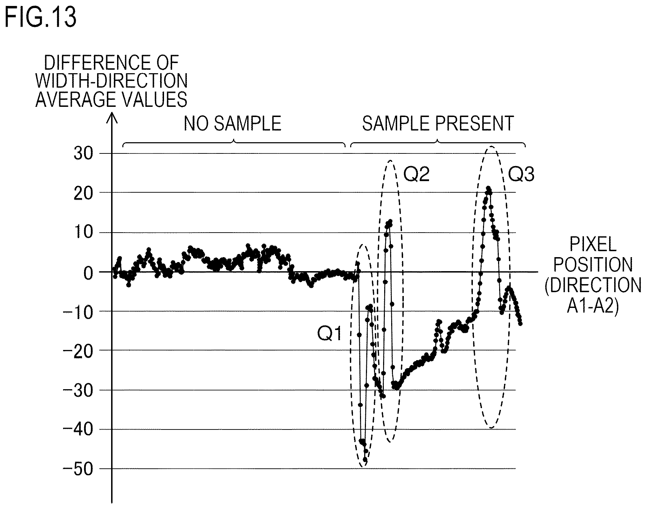

Fig. 13 schematically shows a distribution of differences of width-direction average values on the above-mentioned one line. It is here assumed that the sample is blood. The graph in Fig. 13 reveals that, except peculiar spots indicated as Q1 Q2, and Q3, how differences of width-direction average values change differs clearly between in the part where the sample is present (the part where differences of width-direction average values are close to zero) and in the part where no sample is present (the part where the differences of width-direction average values are negative). Accordingly, based on differences of width-direction average values, the information acquisition unit 104 can easily recognize the boundary between the parts where no sample is present and where the sample is present, and can accurately acquire information on the presence or absence of the sample.

The above-mentioned peculiar spots indicated as Q1, Q2, and Q3 correspond respectively to, in Fig. 12, region P1 in the first analysis image M1 and regions P2 and P3 in the second analysis image M2. Region P1 is a region in the first analysis image M1 where the image 5a1 of the marker 5a is located. Region P2 is a region in the second analysis image M2 where the image 5a1 of the marker 5a is located. Region P3 is a region in the second analysis image M2 that corresponds to an end part of the sample container 5 that has stuck in the container compartment 61 as the chip 6 rotates.

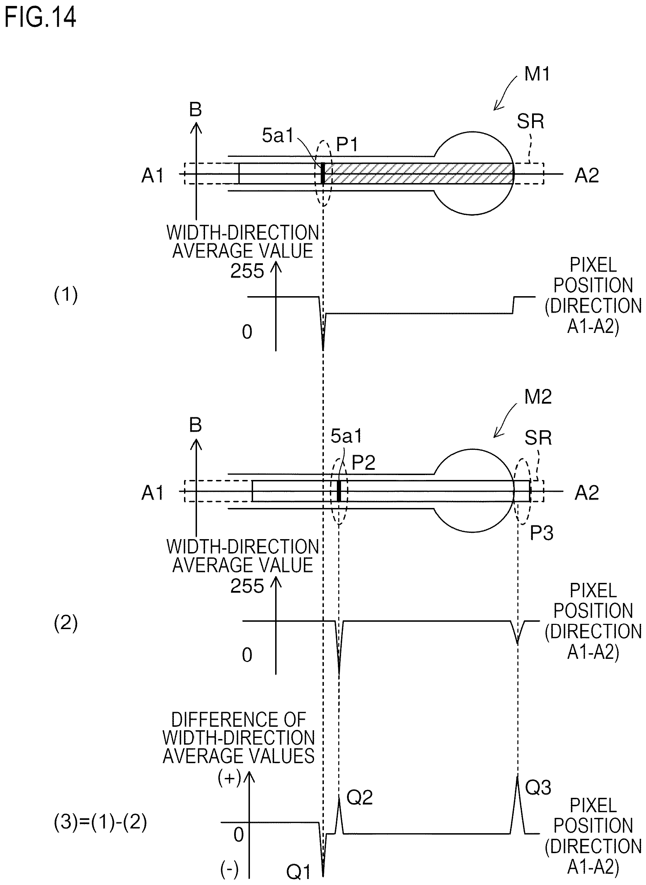

Fig. 14 schematically shows the mechanism by which the peculiar spots Q1, Q2, and Q3 appear. In the first analysis image M1, which is acquired before the rotation of the chip 6, as shown in graph (1) in the diagram, the width-direction average values on one line drop in region P1, where the image 5a1 of the black marker 5a is located, and slightly rises in the dark red region where the sample (blood) is present in the sample container 5.

In the second analysis image M2, which is acquired after the rotation of the chip 6, as shown in graph (2) in the diagram, the width-direction average values on one line drop in the region where the image 5a1 of the black marker 5a is located. In region P3 in the second analysis image M2, due to a slight drop in brightness owing to an overlap between the opaque white cover of the chip 6 and the sample container 5, the average brightness values slightly drop. Region P3 is a region where, owing to the light shone from the light sources 92 being refracted in an end part of the sample container 5, brightness values vary unstably, and may or may not appear during measurement.

At the position of each pixel on one line, subtracting from the width-direction average value (see graph (1)) before the rotation of the chip 6 the width-direction average value (see graph (2)) after the rotation of the sample container 5 gives graph (3). This graph (3) clearly shows that regions P1, P2, and P3 correspond to the peculiar spots Q1 Q2, and Q3 in the graphs of differences of width-direction average values.

### (6-4. Method of Acquiring Target Object Information with a Reduced Effect of Aberrations in the Imaging unit)

In a case where the test object is close-to-transparent liquid such as blood plasma, the lens effect causes the end face of the blood plasma to appear bright. In particular in a case where the background color of the chip 6 as seen from the imaging unit 74 inside the testing chamber 71 is black (e.g., when a chip for hsCRP as a testing item is used), the end face of the blood plasma appears noticeably bright.

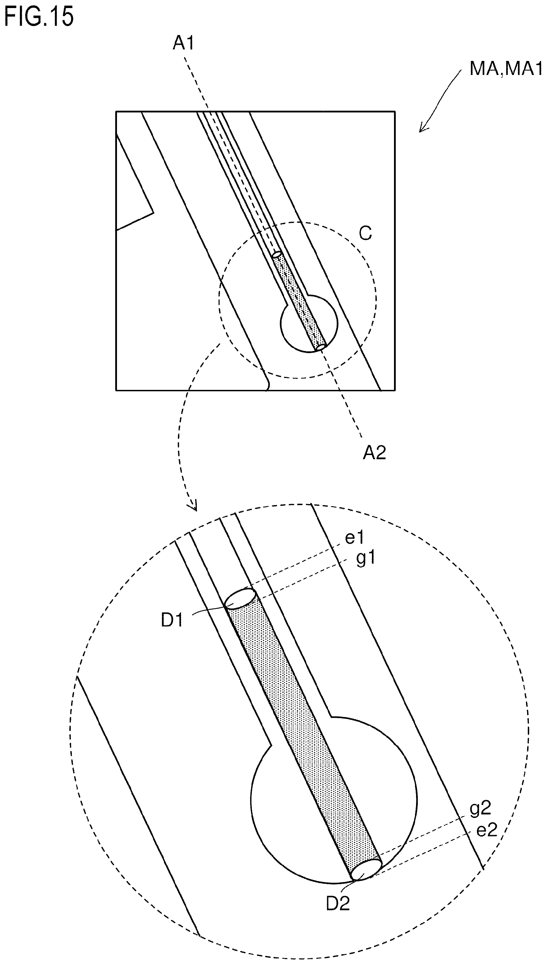

On the other hand, the imaging unit 74 is provided primarily to read the two-dimensional code 64a on the label 64 affixed to the surface of the chip 6, and is arranged at a position in the testing chamber 71 suitable for the reading of the two-dimensional code 64a (e.g., a position at which it can read the two-dimensional code 64a from right above it). Accordingly, shooting the sample container 5 located in an end part of the chip 6 with the imaging unit 74 results in shooting the sample container 5 from an oblique direction. This increases the effect of aberrations in the imaging unit 74, with the result that, as shown in an enlarged view of part C in Fig. 15, the first analysis image M1 shows high-brightness distortions D1 and D2 in parts corresponding to the end faces of blood plasma. The high-brightness distortions D1 and D2 may act to increase differences in width-direction average values, and may hamper accurate acquisition of target object information.

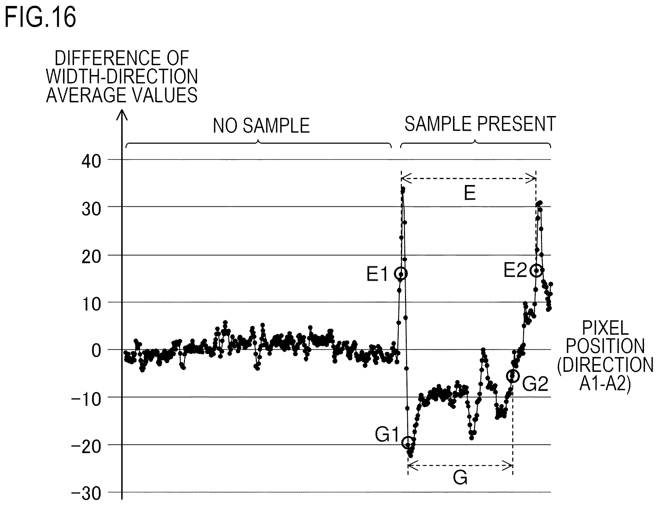

To cope with that, for a particular chip 6 (for hsCRP as a testing item), the information acquisition unit 104 acquires target object information based on the first and second analysis images M1 and M2 in the following manner. Fig. 16 schematically shows a distribution, on one line, of differences of width-direction average values between the first and second analysis images M1 and M2 as obtained with respect to a particular chip 6.

The information acquisition unit 104 first detects a large range E from the distribution in Fig. 16 and then extracts a small range G from the large range E. The large range E is a range that is defined based on a first threshold value (e.g., +13) higher than a reference value (e.g., 0) for differences of width-direction average values, and corresponds to, in the distribution on the above-mentioned one line, a region where the sample is considered to be present with distortions at the end faces. There, the information acquisition unit 104 detects as the large range E a range extending, along the above-mentioned one line from one side (side A1) to the other side (side A2), from a point (e.g., E1) where the distribution curve rises above the first threshold value twice or more while monotonically increasing to a point (e.g., E2) where it rises above the first threshold value twice or more the second time while monotonically increasing. The positions of points E1 and E2 in the distribution of Fig. 16 correspond respectively to the positions of e1 and e2 in the first analysis image M1 in Fig. 15.

On the other hand, the small range G is a range defined within the large range E based on a second threshold value (e.g., -8) lower than the reference value mentioned above, and corresponds to, in the distribution of the above-mentioned one line, a region where the sample is considered to be present with no distortions at the end faces. Here, extracted as the small range G is a range extending, along the above-mentioned one line from one side (side A1) to the other side (side A2), from a point (e.g., G1) where the distribution curve falls below the second threshold value twice or more while monotonically decreasing to, of points where it rises above the second threshold value twice or more while monotonically increasing, the point closest to A2 (e.g., point G2). The positions of points G1 and G2 in the distribution of Fig. 16 correspond respectively to the positions of g1 and g2 in the first analysis image M1 in Fig. 15.

The information acquisition unit 104 then calculates the average, in the one-line direction, of differences of width-direction average values in the small range G and, by comparing it with a third threshold value (e.g., -10), judges whether the sample is present or absent and acquire the result as target object information.

For a particular chip 6, by extracting the small range G from the large range E in the distribution of differences of width-direction average values on one line, it is possible to exclude the region where differences of width-direction average values are larger under the effect of the distortions D1 and D2 (see Fig. 15) ascribable to aberrations in the imaging unit 74. Thus, by acquiring target object information based on differences of width-direction average values in the small range G, it is possible to accurately acquire target object information under a reduced effect of aberrations in the imaging unit 74. Thus, the above-described method of acquiring target object information is very effective in a situation where the sample container 5 has to be shot under a condition where aberrations in the imaging unit 74 have a strong effect because of the construction or design of the device as where the sample container 5 is not located right below the imaging unit 74.

The imaging unit 74 may previously read the two-dimensional code 64a (identification information) on the label 64 affixed to the surface of the chip 6. In that case, based on the two-dimensional code 64a, the information acquisition unit 104 can recognize the kind (testing item) of chip 6. In that way the information acquisition unit 104 can previously recognize whether the chip 6 to be used is a particular chip 6 and, if so, can acquire target object information by carrying out the method described above.

### (6-5. Overlaying Analysis Images)

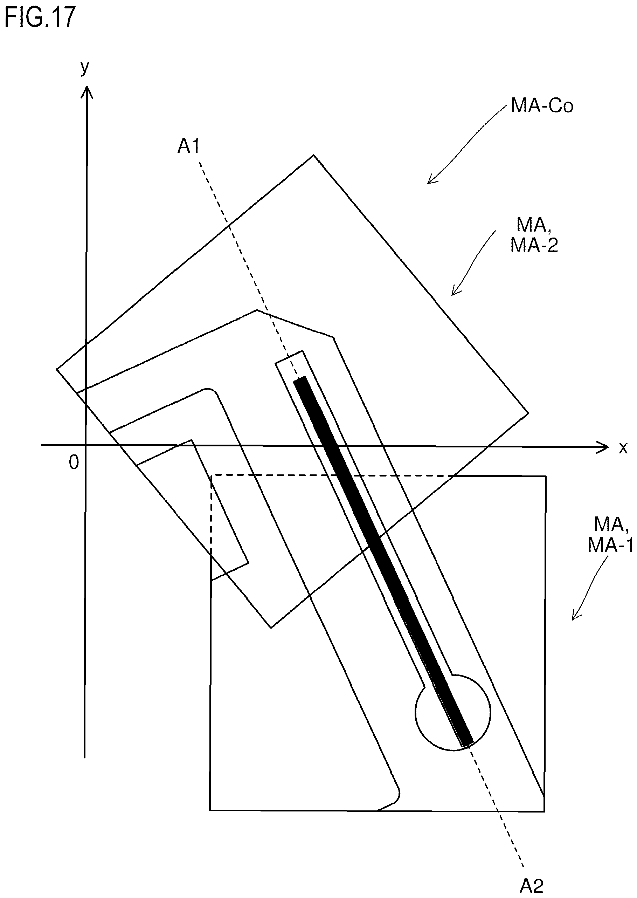

Fig. 17 schematically shows a composite analysis image MA-Co resulting from overlaying together a plurality of analysis images MA with reference to the same position on the chip 6. Usable as the analysis images MA here are, for example, the analysis images MA described under the heading (6-1. Method Using Brightness Values Themselves).

As shown in Fig. 4 etc., in the construction where the sample testing device 1 includes the rotation mechanism 80 and the rotation mechanism 80 includes the motor 82 and the encoder 87, while the rotation mechanism 80 rotates and stops the chip 6 a predetermined angle at a time, the acquisition of a plurality of individual images K1 to K12 with respect to part of the chip 6 by the imaging unit 74 and the generation of the analysis images MA by the image generation unit 103 may be performed repeatedly at each of the different rotation positions of the chip 6. Suppose here that part of the chip 6 is shot at each of two different rotation positions and the analysis images MA generated at those rotation positions are referred to as analysis images MA-1 and MA-2 respectively. The image generation unit 103 may then generate the composite analysis image MA-Co by overlaying together the plurality of analysis images MA-1 and MA-2 with reference to the same position on the chip 6. The number of different rotation positions of the chip 6 may be three or more, and the number of analysis images MA may be three or more.

It is here assumed that each rotation position of the motor 82 is previously associated with a shooting region (a region defined in the coordinate system in Fig. 17) on the chip 6 that is shot by the imaging unit 74. In this case, when the rotation position of the motor 82 is detected by the encoder 87, based on that rotation position the image generation unit 103 can identify the shooting region on the chip 6. On the other hand, since the plurality of analysis images MA-1 and MA-2 are generated each by shooting part of the chip 6, the analysis images MA-1 and MA-2 correspond one-to-one to the plurality of shooting regions on the chip 6. Accordingly, the image generation unit 103 can, by recognizing the same coordinate position included in each shooting region in the coordinate system in Fig. 17, recognize the same position on the chip 6 among the plurality of analysis images MA-1 and MA-2. The image generation unit 103 can then overlay together the plurality of analysis images MA-1 and MA-2 with reference to the recognized same position on the chip 6.

Owing to the image generation unit 103 generating the composite analysis image MA-Co as described above, the information acquisition unit 104 can acquire target object information based on the composite analysis image MA-Co mentioned above by a method similar to the one described above under the heading (6-1. Method Using Brightness Values Themselves).

Even if the individual analysis images MA-1 and MA-2 are images that represent brightness values with respect to parts of the chip 6 (e.g. parts of the sample container 5), by merging those analysis images MA-1 and MA-2 together such that the same position on the chip 6 overlaps between them, it is possible to acquire a composite analysis image MA-Co that has brightness values with respect to the entire sample container 5. In this way, even under a condition where the imaging unit 74 can shoot only part of the sample container 5 at the time, based on the composite analysis image MA-Co the information acquisition unit 104 can acquire target object information (i.e., information on whether a sufficient amount of sample is put in the sample container 5) with respect to the entire sample container 5.

The technique of generating a composite analysis image MA-Co by overlaying together a plurality of analysis images MA acquired at different rotation positions of the chip 6 can be applied in a case where the first and second analysis images M1 and M2 described previously are used.

### [7. Additionally Shooting the Inspection portion]

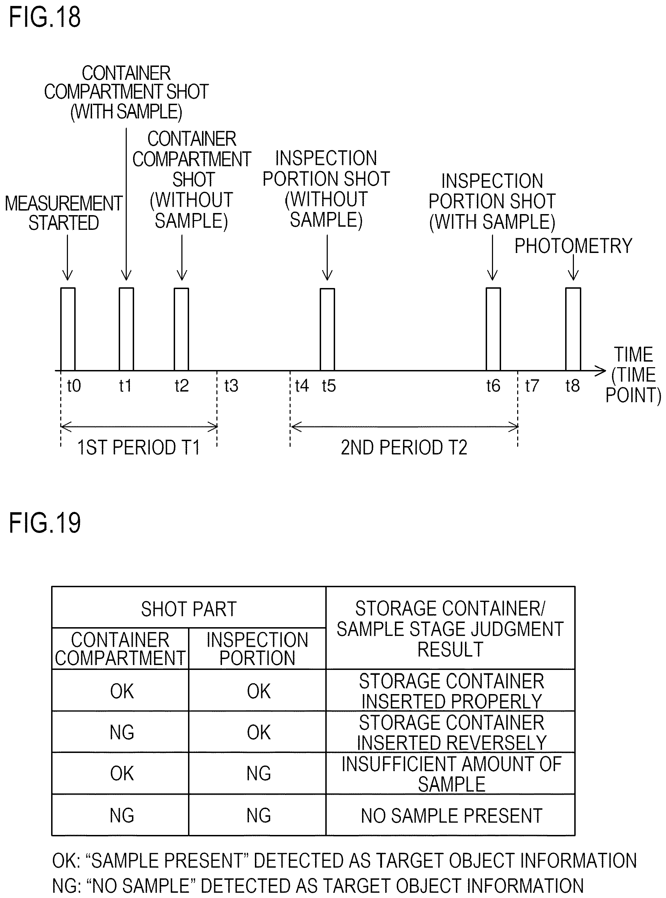

Fig. 18 schematically shows a temporal flow (sequence) of light absorbance measurement (photometry) achieved by the imaging unit 74 shooting the chip 6 in two stages. The imaging unit 74 may acquire a plurality of individual images during each of a first period T1 and a second period T2. The sequence will now be described in detail while referring to the construction shown in Figs. 1 to 4.

In the first period T1, the imaging unit 74, by shooting the container compartment 61 in the chip 6 located in the illuminated area LA by the rotation mechanism 80, acquires a plurality of individual images with respect to the container compartment 61. The first period T1 starts, for example, at time point t0 when, with the chip 6 put in the testing chamber 71, a Start button is pressed to start measurement. The first period T1 ends at time point t3 at the lapse of, for example, 15 seconds from time point t0. The shooting of the container compartment 61 by the imaging unit 74 is performed, for example, at time point t1 at the lapse of three seconds from time point t0. Thereafter, for example, between time points t1 and t2 (at the lapse of, for example, 10 seconds from time point t0), the rotation mechanism 80 starts to rotate the chip 6. Thus, the sample put in the sample container 5 is fed into the micropassage in the chip 6. The time lapses from time point t0 to time points t1 to t3 are not limited to the values specifically mentioned above, and can be set as desired.

During the second period T2, the imaging unit 74 by shooting the inspection portion 63 (the window for detecting the test object) of the chip 6 located in the illuminated area LA by the rotation mechanism 80, acquire a plurality of individual images with respect to the inspection portion 63. The second period T2 is a period that occurs temporally after the time point t1, and starts at time point t4 at the lapse of, for example, two minutes from time point t0. The second period T2 ends at time point t7 at the lapse of, for example, six minutes from time point t0. The shooting of the inspection portion 63 by the imaging unit 74 is performed at time point t6 at the lapse of, for example, five minutes from time point t0. At the lapse of the second period T2, the measurement unit 76 performs light absorbance measurement. Specifically, at time point t8 at the lapse of, for example, 7.5 minutes from time point t0, the measurement unit 76 performs light absorbance measurement. The time lapses from time point t0 to time points t4 to t8 are not limited to the values specifically mentioned above, and can be set as desired.

Note that, while a plurality of individual images are acquired during the periods T1 and T2, the light sources 92 are lit at different positions at different times respectively, and this is similar to what has been described under the heading [6. Method of Acquiring Target object information].

The image generation unit 103 generates, in each of the periods T1 and T2, an analysis image based on the plurality of individual images acquired. The information acquisition unit 104 then acquires, in each of the periods T1 and T2, target object information based on the analysis image generated. Here, how analysis images are generated and how target object information is acquired based on the analysis images are similar to what has been described under the heading [6. Method of Acquiring Target object information].

In particular in a case where (6-2. Method Using Brightness Value Differences) described above is used, during the first period T1, at time point t2 at the lapse of, for example, 10 seconds from time point t0, the imaging unit 74 one again shoots the container compartment 61. At time point t2, as described above, the chip 6 has already started rotating and thus the sample has flowed from the sample container 5 into the chip 6; thus, the container compartment 61 is shot with no sample present in the sample container 5. Likewise, during the second period T2, at time point t5 at the lapse of, for example, three minutes from time point t0, the imaging unit 74 once again shoots the inspection portion 63. At time point t5, theoretically (because of the design of the micropassage), the sample that flows through the micropassage as the chip 6 rotates has not reached the inspection portion 63; thus, the inspection portion 63 is shot with no sample.

Fig. 19 schematically shows the relationship between target object information acquired (detected) by shooting two parts (container compartment 61 and inspection portion 63) of the chip 6 and the result of judgment of the state of the sample or of the sample container 5. In the diagram, "OK" indicates "sample present" being detected as target object information; "NG" indicates "no sample" being detected as target object information.

For example, if based on the shooting of the container compartment 61 "sample present" is detected and based on the shooting of the inspection portion 63 "sample present" is detected, the information acquisition unit 104 judges that the sample container 5 is inserted properly in the container compartment 61. If based on the shooting of the container compartment 61 "no sample" is detected and based on the shooting of the inspection portion 63 "sample present" is detected, the information acquisition unit 104 judges that the container compartment 61 is inserted reversely in the container compartment 61. Since based on the shooting of the inspection portion 63 "sample present" is detected, the necessary amount of sample is put in the sample container 5; even so, with the sample container 5 inserted reversely in the container compartment 61, the sample put in the sample container 5 may be located outside the shooting range of the imaging unit 74, in which case "no sample" is detected based on the sheeting of the container compartment 61.

If based on the shooting of the container compartment 61 "sample present" is detected and based on the shooting of the inspection portion 63 "no sample" is detected, the information acquisition unit 104 judges that the amount of sample present in the sample container 5 is insufficient (less than the necessary amount of sample is present). This is because, although a sample is put in the sample container 5, the waste liquid has not reached the inspection portion 63. If based on the shooting of the container compartment 61 "no sample" is detected and based on the shooting of the inspection portion 63 "no sample" is detected, the information acquisition unit 104 judges that no sample is put in the sample container 5 (no sample is present) from the beginning.

By in this way shooting different parts (container compartment 61 and inspection portion 63) of the chip 6 in temporally different two stages (periods T1 and T2) and acquiring a plurality of individual images in each stage, it is possible, in each stage, to generate an analysis image and acquire target object information (in the example above, information as to whether "sample present" or "no sample"). Then based on the target object information acquired in the two stages, it is possible to appropriately recognize, as described above, the state of the sample (insufficient amount of sample, or no sample) or the state of the sample container 5 (proper or reversed insertion).

Considering that the operation of inserting (fitting) the sample container 5 into the container compartment 61 is done by a user (doctor, clinical technician, or the like), the sample container 5 may be inserted in the container compartment 61 up to a position where part of the sample container 5 is hidden by the top face of the chip 6. In this case, the imaging unit 74 cannot shoot the part of the sample hidden by the top face of the chip 6; thus even if the necessary amount of sample is put in the sample container 5, based on the result of the shooting of the unhidden part of the sample, a wrong judgment may be made that the amount of sample is insufficient.

In a case where the sample container 5 has a scratch on its surface, by (6-2. Method Using Brightness Value Differences) described above, it is possible to acquire target object information with the effect of the scratch cancelled. Depending on the size of the scratch or the area where it is formed, however, the effect of the scratch may not be cancelled completely. Thus, judging the state of the sample or of the sample container 5 based solely on the result of the shooting of the container compartment 61 may lead to a wrong judgement ascribable to a scratch as mentioned above.

According to this embodiment, as described above, the state of the sample or the state of the sample container 5 is judged comprehensibly based on two sets of target object information acquired by shooting the container compartment 61 and the inspection portion 63 in two stages. It is thus possible to minimize wrong judgment on the state of the sample or the state of the sample container 5 and thereby improve the accuracy of judgement.

In particular, the information acquisition unit 104 judges whether the necessary amount of sample is put in the sample container 5 based on two sets of target object information (acquired in two stages), and this helps improve the accuracy of judgement on insufficiency of the amount of sample.

### [8. Method of Judging the State of the Sample Based on a Histogram]

The above-mentioned micropassage in the chip 6 is provided with a blood cell separator. The blood cell separator is a spot where, when whole blood put as a sample in the sample container 5 flows into the micropassage as the chip 6 rotates, blood cells contained in the whole blood concentrate by centrifugal separation. In a case where the testing item is, for example, CRP, blood plasma having blood cells removed from it continues to pass through the micropassage. The blood plasma then reacts with the test reagent to produce a reaction product as the target of light absorbance measurement.

Here, if blood cells and blood plasma are not separated completely in the blood cell separator and the blood plasma that reacts with the test reagent contains blood cells, this may lower the accuracy of light absorbance measurement on the reaction product. To cope with that, according to this embodiment, whether blood plasma contains blood cells is checked by the method described below to avoid a lowering of the accuracy of light absorbance measurement. It is here assumed that at time point t6 at the lapse of a predetermined (e.g., five minutes) from the start of measurement (time point t0) the sample (waste liquid) reaches the inspection portion 63.

In the second period T2 shown in Fig. 18, at time point t5 before the lapse of a predetermined time (e.g., five minutes) from the start of measurement (time point t0), the rotation mechanism 80 stops the rotation of the chip 6 so that the inspection portion 63 is located in the illuminated area LA. In this state the imaging unit 74 shoots the inspection portion 63. That is, the imaging unit 74 shoots the inspection portion 63 before the sample reaches the inspection portion 63 as the chip 6 rotates. At that time, the inspection portion 63 is shot with the 12 light sources 92 lit at different positions at different times respectively. In this way the imaging unit 74 acquires a plurality of individual images with respect to the inspection portion 63 as first window-part individual images.

Subsequently, the rotation mechanism 80 restarts the rotation of the chip 6, and at time point t6 at the lapse of the above-mentioned predetermined time from the start of measurement (time point t0), the rotation mechanism 80 stops the rotation of the chip 6 so that the inspection portion 63 is located in the illuminated area LA. In this state the imaging unit 74 shoots the inspection portion 63. That is, after with the rotation of the chip 6 the sample reaches the inspection portion 63, the imaging unit 74 shoots the inspection portion 63. At this time, the inspection portion 63 is shot with the 12 light sources 92 lit at different positions at different times respectively. In this way the imaging unit 74 acquires a plurality of individual images with respect to the inspection portion 63 as second window-part individual images.

Next, the image generation unit 103 generates, based on the plurality of first window-part individual images, a first window-part analysis image MA-a as an analysis image MA and, based on the plurality of second window-part individual images, a second window-part analysis image MA-b as an analysis image MA. The first and second window-part analysis images MA-a and MA-b can be generated by a method similar to [6. Method of Acquiring Target object information] described above. It is thus possible to obtain benefits similar to those mentioned under the heading [6. Method of Acquiring Target object information]. For example, even if blown-out highlights ascribable to a plurality of light source 92 being lit appear in the individual images (first and second window-part individual images), they are less noticeable in the analysis images (first and second window-part analysis images MA-a and MA-b); it is thus possible to acquire analysis images with reduced brightness unevenness with respect to the inspection portion 63.

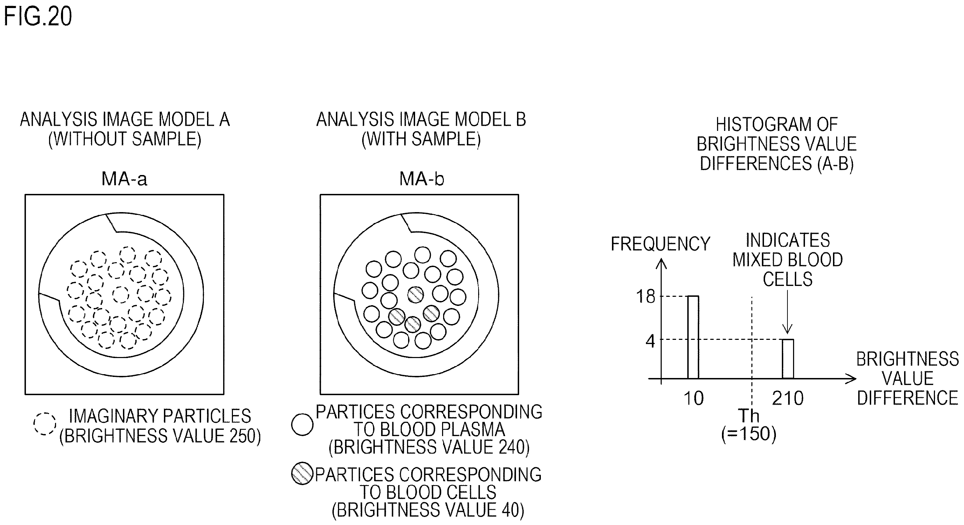

Fig. 20 shows models of the first and second window-part analysis images MA-a and MA-b, respectively, generated by the image generation unit 103. In a case where, as mentioned earlier, a brightness value can take a value in the range from 0 (dim) to 255 (bright) in eight-bit representation, since the first window-part analysis image MA-a (analysis image model A) is generated based on a plurality of individual images shot with no sample present, the brightness values of the pixels in the first window-part analysis image MA-a corresponding to the position of the inspection portion 63 are close to 255. Here, for the sake of easy understanding, consider imaginary particles with a brightness value of 250 as a plurality of pixels in the first window-part analysis image MA-a corresponding to the position of the inspection portion 63.

Since the second window-part analysis image MA-b (analysis image model B) is generated based on a plurality of individual images shot with a sample present, the above-mentioned imaginary particles included in the first window-part analysis image MA-a should, in the second window-part analysis image MA-b, be all replaced with particles representing the sample. If, however, blood plasma contains blood cells, the imaginary particles included in the first window-part analysis image MA-a are replaced partly with particles (with a brightness value of, for example, 240) representing blood plasma and partly with particles (with a brightness value of, for example, 40) representing blood cells. In this case, creating a distribution (histogram) of the differences of the brightness values of the pixels at the same positions between the first and second window-part analysis images MA-a and MA-b gives, in the case of Fig. 20, a distribution in which, for example, 18 particles have a brightness value difference of 10 (= 250 - 240) and, for example, four particles have a brightness value difference of 210 (= 250 - 40).

Accordingly, with a threshold value Th for brightness value differences set at, for example, 150, the information acquisition unit 104 can create a distribution representing the relationship of the brightness value differences of the pixels at the same positions between the first and second window-part analysis images MA-a and MA-b with their frequencies and check whether there are a predetermined number or more of pixels with differences equal to or greater than the threshold value Th; it can thereby check whether blood plasma contains blood cells. That is, the information acquisition unit 104 can, by judging the state of the sample based on the distribution of the brightness value differences of the pixels at the same positions between the first and second window-part analysis images MA-a and MA-b, easily judge whether the sample (e.g., blood) contains foreign matter (e.g., blood cells left unseparated). If blood plasma contains blood cells, it is possible to make the device output an error (e.g., an alert sound) or otherwise prompt the user to perform measurement again.

### [9. Ripple Structure of the Inspection portion]

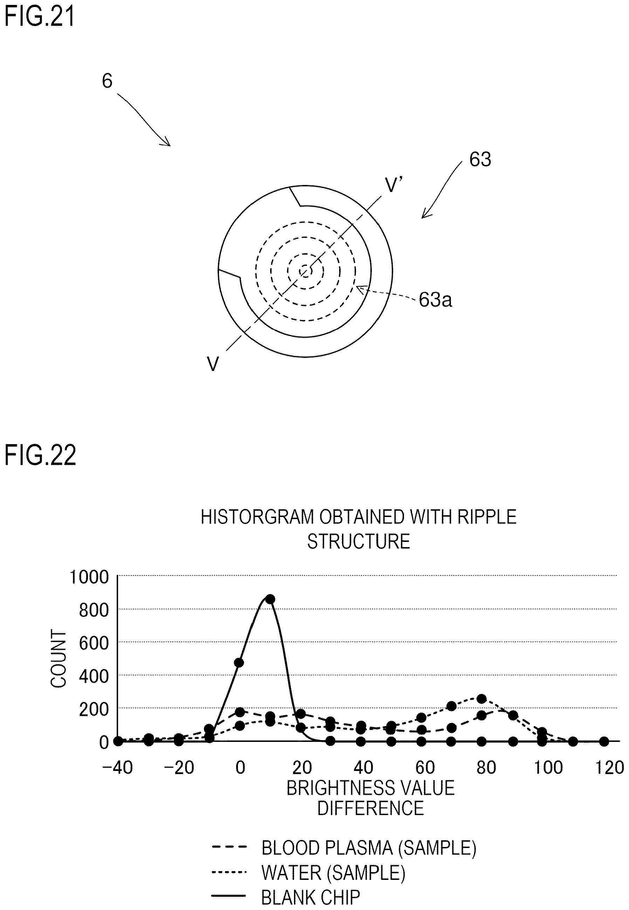

Fig. 21 is a plan view showing, on an enlarged scale, the inspection portion 63 of the chip 6. The inspection portion 63 has a ripple structure 63a. The ripple structure 63a is a surface with concentric annular elevations and depressions that makes contact with the sample flowing through the passage inside the chip 6.

Owing to the inspection portion 63 having the ripple structure 63a, according to whether a sample is present or absent in the passage, the total reflection conditions for light incident on the surface of the ripple structure 63a change. For example, if no sample is present in the passage, light incident on the ripple structure 63a from above it is totally reflected on the surface of the ripple structure 63a and does not enter the passage. By contrast, if a sample is present in the passage, light incident on the ripple structure 63a from above it is refracted by the ripple structure 63a to enter the passage. Thus, according to whether a sample is present or absent in the passage, shot images of the inspection portion 63 have different lightness (have different brightness values). Thus, when an analysis image is generated based on shot images (individual images), the information acquisition unit 104 can easily discriminate (judge) whether a sample is present or absent in the inspection portion 63.

Fig. 22 shows the above-mentioned distribution of brightness value differences (corresponding to the histogram in Fig. 20) acquired when the inspection portion 63 has the ripple structure 63a. It is seen from the diagram that, irrespective of the kind of sample (blood plasma or water), larger brightness value differences are observed between with a sample present and with no sample present (blank chip), and this allows easy distinction of whether a sample is present or absent based on the above distribution.

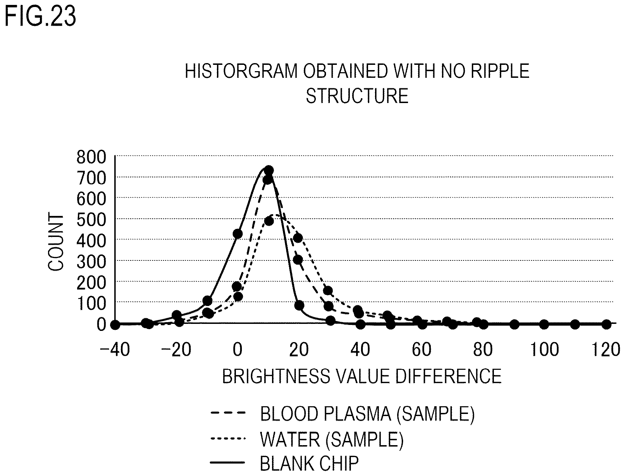

Fig. 23 shows a distribution of brightness value differences acquired when the inspection portion 63 does not have the ripple structure 63a. It is seen from the diagram that no large brightness value differences are observed between blood plasma and water, and the similarity of the distributions with respect to them makes it difficult to distinguish blood plasma and water. The distributions with respect to blood plasma and water are also similar to the distribution with respect to a blank chip, and this makes it difficult to distinguish blood plasma and a blank chip, or water and a blank chip.

### [10. Detecting Faults in the Device and in the Measurement Environment]

The information acquisition unit 104 described above may, in each of the first and second periods T1 and T2 shown in Fig. 18, extract an image edge from the plurality of individual images acquired and check for a fault based on the displacement of the extracted edge.

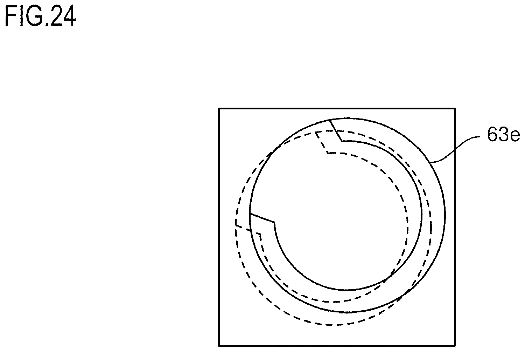

Fig. 24 shows one individual image of the inspection portion 63. In Fig. 24, the regular position of the inspection portion 63 in a shot image is indicated by broken lines, and a position of it displaced from the regular position is indicated by solid lines. In Fig. 24, for convenience' sake, blown-out highlight regions that appear owing to point light sources are omitted from illustration.

For each of the plurality of individual images of the inspection portion 63, the information acquisition unit 104 extracts the position of the edge 63e of the inspection portion 63 by a well-known edge extraction process. If any of the plurality of individual images differs from the other in the position of the edge 63e, the information acquisition unit 104 can judge that the shooting position of the inspection portion 63 is displaced.

As described above, the information acquisition unit 104 checks for a displacement of the inspection portion 63 of the chip 6 so that, if there is a displacement, it can recognize a fault in the device (sample testing device 1) or in the measurement environment and make the device output an error (e.g., an alert sound) or otherwise cope with the fault. The information acquisition unit 104 may check for a displacement by using, instead of shot images (individual images) of the inspection portion 63, shot images (individual images) of the container compartment 61.

A fault in the device can be a situation where, for example, vibration of the motor 82 (see Fig. 4) or unstable rotation of the chip 6 causes the chip 6 to incline relative to the imaging unit 74. A fault in the measurement environment can be, for example when the rotation mechanism 80 stops the rotation of the chip 6, a displacement of the actual stop position of the chip 6 relative to its regular stop position. A displaced stop position like that tends to occur due to the sensing accuracy of the encoder 87 (see Fig. 4).

As described above, with a configuration and control according to this embodiment, it is possible to cope even with problems such as the presence of blood cells in blood plasma after blood cell separation and mechanical vibration of the device as mentioned above. It is thus possible to reduce the incidence, on the sample testing device 1, of what is called a time course error, that is, a situation where the standard curve (the rate of change of light absorbance) does not change rectilinearly.

### [11. Other Configurations of a Sample Testing Device]

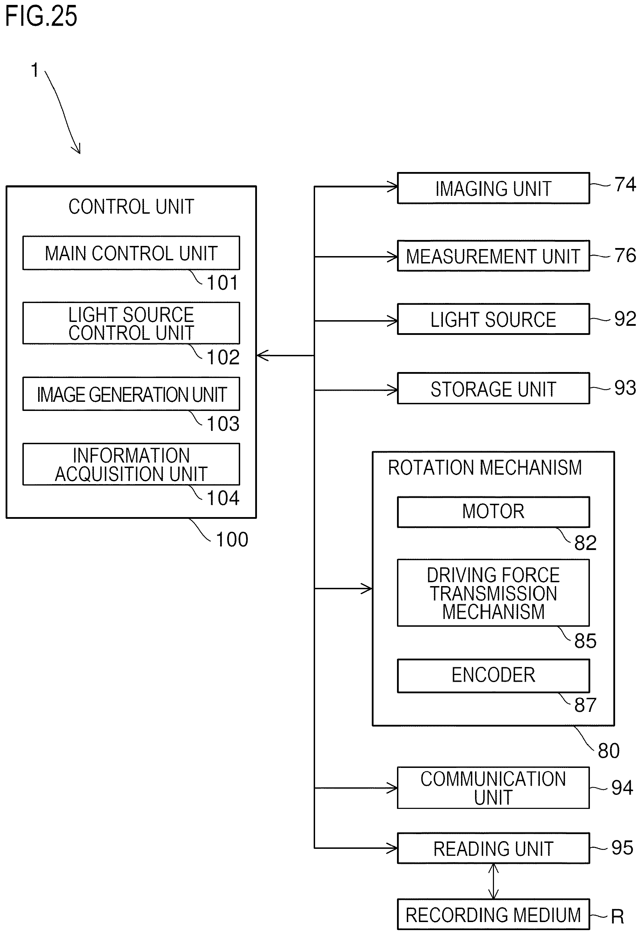

Fig. 25 is a block diagram schematically showing another configuration of the sample testing device 1. The sample testing device 1 includes, in addition to what is shown in Fig. 4 etc., a communication unit 94 and a reading unit 95. The communication unit 94 is an interface for communication with the outside, and is configured to include an antenna, a transmitter-receiver circuit, a modulator circuit, a demodulator circuit, etc.

The reading unit 95 is a device for reading information (e.g., an operation program for the controller 100) recorded on a recording medium R, and is configured as a reading device such as a disk drive. In a case where the recording medium R is a portable non-volatile memory, the reading unit 95 is assumed to include a connection port into which a connecting part of the non-volatile memory is plugged.

The sample testing device 1 in Fig. 25 can be configured with a computer having an operation program (application software) installed on it. The computer (e.g., the control unit 100 as a CPU) can read and execute the program and thereby make different parts of the sample testing device 1 operate to perform the different kinds of processing (processes) described above. Such a program is acquired and stored in the storage unit 93, for example, by being downloaded from outside via a network and the communication unit 94. The program may instead be recorded on a computer-readable recording medium R such as a CD-ROM (compact disk-read only memory) and be stored in the storage unit 93 by the reading unit 95 reading it from the recording medium R. That is, the program according to this embodiment is a program for making a computer carry out the information processing method described above in order to acquire target object information. The recording medium R according to this embodiment is a computer-readable recording medium on which the above-mentioned program is recorded.

### [12. Notes]

The number of pixels in the analysis images MA need not be the same as the number of pixels in the individual images K1 to K12. For example, the number of pixels in the analysis images MA may be equal to the number of pixels corresponding to one line (along direction A1-A2) of the individual images K1 to K12, or equal to the number of pixels corresponding to 33 lines of them. When the number of pixels in the individual images K1 to K12 is m × n (where m and n are each a positive number of two or more), the number of pixels in the analysis images MA may be A × B (where A is a positive number of m - 1 or less and B is a positive number of n - 1).

As a method of calculating the brightness value of each pixel in the analysis images MA, it is possible to calculate the average value of the brightness values of all the pixels in the individual images, then calculate the deviation value for the brightness value of each pixel in the individual images, calculate the average value of the deviation values of the pixels at the same positions among the plurality of individual images, and takes the brightness value corresponding to the average deviation value as the brightness values of the pixels at the same positions among the analysis images MA.

The information processing method for acquisition of target object information described above as an embodiment may be implemented as a system that includes the sample testing device 1 and an external server. That is, it is possible to transmit the data (brightness values) of individual images from the sample testing device 11 to the server, and make the server generate analysis images MA and acquire target object information.

The test object and the testing device are not limited to a sample and a sample testing device 1 respectively. For example, also with water as a test object and a device for testing water quality as a testing device, it is possible, as in the embodiment described above, to generate analysis images based on a plurality of individual images and acquire target object information based on the generated analysis images.

While the present invention has been described by way of embodiments, these are in no way meant to limit the scope of the present invention; they may be implemented with any extensions or modifications made without departure from the spirit of the present invention.

The present invention finds applications in sample testing devices for testing a sample as a test object,

- 1: sample testing device (testing device)
- 5: sample container (storing container)
- 6: chip
- 61: container compartment
- 63: inspection portion (window for test object detection)
- 64: label
- 64a: two-dimensional code (identification information)
- 74: imaging unit
- 76: measurement unit
- 80: rotation mechanism
- 82: motor (driving unit)
- 87: encoder (rotational position sensing unit)
- 92: light source
- 93: storage unit
- 102: light source control unit
- 103: image generation unit
- 104: information acquisition unit

## Claims

1. A testing device, comprising:
at least one light source configured to be lit at different positions;
a light source control unit configured to control lighting of the at least one light source;
a rotation mechanism configured to rotate a chip loaded with a storage container for storing a test object;
an imaging unit configured to acquire a plurality of individual images by shooting the chip located, by being rotated by the rotation mechanism, in an illuminated area illuminated by the lighting of the at least one light source, the imaging unit shooting the chip at each of the different positions at different times respectively;
an image generation unit configured to generate an analysis image based on the plurality of individual images; and
an information acquisition unit configured to acquire target object information on a state of the test object or of the storage container based on the analysis image,
wherein
a brightness value of each pixel in the analysis image is calculated using brightness values of pixels at a same position among the plurality of individual images.

2. The testing device according to claim 1, wherein
the light source comprises a plurality of light sources, and
the light source control unit lights the plurality of light sources one at each of the different positions at different times respectively.

3. The testing device according to claim 1 or 2, wherein
each pixel in the analysis image has a brightness value within an average brightness range permissible for an average brightness of the pixels at the same position among the plurality of individual images.

4. The testing device according to claim 3, wherein
when a distribution of the brightness values of the pixels at the same position among the plurality of individual images is normalized, the average brightness range is a range of brightness values of n - σ or more but n + σ or less, where n is an average brightness value and σ is a standard deviation.

5. The testing device according to any one of claims 1 to 4, wherein
the information acquisition unit acquires the target object information based on the brightness values of pixels on a previously set one line in the analysis image.

6. The testing device according to any one of claims 1 to 4, wherein
when
the analysis image that the image generation unit generates with the test object stored in the storage container is a first analysis image and
the analysis image that the image generation unit generates without the test object stored in the storage container is a second analysis image,
the information acquisition unit acquires the target object information based on differences of the brightness values of the pixels at same positions between the first and second analysis images.

7. The testing device according to claim 6, wherein
before the chip loaded with the storage container storing the test object is rotated by the rotation mechanism, the imaging unit shoots the chip with the light source lit at each of the different positions at different times respectively to acquire a plurality of first individual images,
after the chip has been rotated by the rotation mechanism until the test object flows from the storage container into the chip, the imaging unit shoots the chip with the light source lit at each of the different positions at different times respectively to acquire a plurality of second individual images,
the image generation unit
generates the first analysis image based on the plurality of first individual images and
generates the second analysis image based on the plurality of second individual images.

8. The testing device according to claim 6, further comprising:
a storage unit configured to previously store the second analysis images,
wherein
the information acquisition unit acquires the target object information based on differences of the brightness values of the pixels at the same positions between the first analysis image and the second analysis image stored in the storage unit.

9. The testing device according to any one of claims 6 to 8, wherein
in each of the first and second analysis images, at a position of each pixel on a previously set one line, the information acquisition unit calculates a width-direction average value by averaging brightness values among a plurality of pixels arrayed in a width direction perpendicular to the one line within a particular region including the one line and a plurality of lines parallel thereto, the information acquisition unit acquiring the target object information based on differences of width-direction average values between the first and second analysis images.

10. The testing device according to claim 9, wherein
in a distribution, on the one line, of the differences of the width-direction average values between the first and second analysis images as obtained with respect to a particular chip as the chip, the information acquisition unit extracts, within a large range defined based on a first threshold value higher than a reference value, a small range defined based on a second threshold value lower than the reference value, the information acquisition unit acquiring the target object information based on the differences of the width-direction average values in the small range.

11. The testing device according to claim 10, wherein
the chip is affixed with a label bearing identification information for identifying a testing item with respect to the test object,
the imaging unit previously shoot the label to acquire the identification information, and
the information acquisition unit recognizes the type of chip based on the identification information read by the imaging unit.

12. The testing device according to any one of claims 1 to 11, wherein
the rotation mechanism includes:
a driving unit configured to generate a driving force for rotating the chip; and
a rotational position sensing unit configured to sense a rotation position of the driving unit,
the imaging unit acquires the plurality of individual images by shooting part of the chip at each of different rotation positions of the chip,
the image generation unit
acquires the analysis images based on the plurality of individual images at each of the different rotation positions of the chip and
generates a composite analysis image by overlaying together the plurality of analysis images with reference to a same position on the chip based on the rotation position sensed by the rotational position sensing unit, and
the information acquisition unit acquires the target object information based on the composite analysis image.

13. The testing device according to any one of claims 1 to 12, wherein
the chip has:
a container compartment in which the storage container is loaded; and
a window through which to detect the test object, the window being located in a flow passage through which, when the chip is rotated by the rotation mechanism, part of the test object in the storage container other than a necessary amount thereof flows as waste liquid,
the imaging unit acquires the plurality of individual images in each of a first period and a second period temporally later than the first period,
in the first period, the imaging unit acquires the plurality of individual images by shooting the container compartment of the chip located in the illuminated area by the rotation mechanism, and
in the second period, the imaging unit acquires the plurality of individual images by shooting the window of the chip located in the illuminated area by the rotation mechanism.

14. The testing device according to claim 13, wherein
in each of the first and second periods, the image generation unit generates the analysis image based on the plurality of individual images acquired, and
in each of the first and second periods, the information acquisition unit acquires the target object information based on the analysis image generated, the information acquisition unit comprehensively judging the state of the test object or the state of the storage container based on two sets of the target object information acquired.

15. The testing device according to claim 14, wherein
based on the two sets of the target object information, the information acquisition unit judges whether a necessary amount of the test object is stored in the storage container.

16. The testing device according to any one of claims 13 to 15, wherein
in the second period, the imaging unit
acquires the plurality of individual images as first window-part individual images by shooting the window before the chip is rotated until the test object reaches the window and
acquires the plurality of individual images as second window-part individual images by shooting the window after the chip has been rotated until the test object reaches the window,
the image generation unit
generates as the analysis image a first window-part analysis image based on the plurality of first window-part individual images and
generates as the analysis image a second window-part analysis image based on the plurality of second window-part individual images, and
the information acquisition unit judges the state of the test object based on a distribution of differences of brightness values of the pixels at the same positions between the first and second window-part analysis images.

17. The testing device according to any one of claims 13 to 16, wherein
in each of the first and second periods, the information acquisition unit extracts an image edge from the plurality of individual images acquired, the information acquisition unit checking for a fault based on displacement of the extracted edge.

18. The testing device according to any one of claims 1 to 18, wherein
a brightness value of each pixel in the analysis image is an average brightness value resulting from averaging brightness values of the pixels at the same positions among the plurality of individual images.

19. An information processing method, comprising:
a step of rotating a chip loaded with a storage container storing a test object to locate the chip in an illuminated area;
a step of lighting at least one light source to shine light onto the chip located in the illuminated area;
a step of shooting the chip illuminated by the light source to acquire an individual image;
a step of, after shooting the chip, lighting at least one light source at a position different from a position at which the chip was previously shot, to shine light onto the chip located in the illuminated area;
a step of shooting the chip illuminated by the light source at the different position to acquire another individual image;
a step of generating an analysis image based on the plurality of individual images acquired;
a step of acquiring target object information on a state of the test object or of the storage container based on the analysis image,
wherein
a brightness value of each pixel in the analysis image is calculated using brightness values of pixels at a same position among the plurality of individual images.

20. A program for making a computer carry out the information processing method according to claim 19.
